(19) Europäisches Patentamt
European Patent Office
Office européen des brevets

(11) **EP 3 812 973 A1**

(12) **EUROPEAN PATENT APPLICATION**
published in accordance with Art. 153(4) EPC

(43) Date of publication:
**28.04.2021 Bulletin 2021/17**

(51) Int Cl.:
**G06N 20/00** (2019.01)   **G06F 16/906** (2019.01)

(21) Application number: **19823637.4**

(22) Date of filing: **30.05.2019**

(86) International application number:
**PCT/JP2019/021542**

(87) International publication number:
**WO 2019/244596 (26.12.2019 Gazette 2019/52)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **22.06.2018 JP 2018119116**

(71) Applicant: FUJIFILM Corporation
Tokyo 106-8620 (JP)

(72) Inventors:
• NAKABAYASHI, Jun
Ashigarakami-gun, Kanagawa 258-8538 (JP)
• OHIRA, Shino
Ashigarakami-gun, Kanagawa 258-8538 (JP)
• TSUMURA, Kyosuke
Ashigarakami-gun, Kanagawa 258-8538 (JP)

(74) Representative: Klunker IP
Patentanwälte PartG mbB
Destouchesstraße 68
80796 München (DE)

(54) **DATA PROCESSING DEVICE, DATA PROCESSING METHOD, DATA PROCESSING PROGRAM, AND NON-TRANSITORY RECORDING MEDIUM**

(57) An object of the present invention is to provide a data processing device, a data processing method, a data processing program, and a non-transitory recording medium capable of appropriately classifying a plurality of pieces of high-dimensional data. In a data processing device according to a first aspect, similarity between pieces of reference data (data allocated to each lattice point) is regarded as an inter-lattice-point distance without assuming a special shape in a lattice point space. Thus, since one lattice point is coupled to all other lattice points (at the inter-lattice-point distance corresponding to the similarity between the pieces of reference data) and there is no "lattice point that is distant geometrically", information on input data can be reflected on all the lattice points, and the lattice points of substantially the same reference data do not appear at separated locations in the lattice point space. As described above, according to the data processing device of the first aspect, it is possible to appropriately classify the plurality of pieces of high-dimensional data.

FIG. 4

EP 3 812 973 A1

**Description**

**BACKGROUND OF THE INVENTION**

1. Field of the Invention

The present invention relates to a data processing device, a data processing method, a data processing program, and a non-transitory recording medium, and particularly to a technology for classifying input data.

2. Description of the Related Art

A technology using a "self-organizing map (SOM)" is known as a method of classifying input data into data having similar properties. The self-organizing map (hereinafter, sometimes referred to as the "SOM") is a map generated by one method of machine learning devised by Mr. T. Kohonen, and is a map self-organizationally generated by repeating an operation of searching for a lattice point having reference data closest to input data and impregnating (reflecting) information on the input data near this lattice point. The SOM is a map in which a large number of pieces of input data are mapped from a high-dimensional space to a low-dimensional space while maintaining similarity between the pieces of data. A technology for creating a structure map showing a three-dimensional structure of molecules has been known as a data classification technology using such SOM (for example, see JP2007-277234A). In the case of the molecule, a dimension of data can be represented by, for example, the number of dihedral angles, and a molecule having a complicated three-dimensional structure has high-dimensional data.
In the creation of the SOM described above, the arrangement of data in the map changes by learning. A scene of such a change is described in, for example, "self-organizing - automatic classification algorithm", [online], Yuji Ikegaya, [searched on May 7, 2018], Internet (http://gaya.jp/spiking_neuron/som.htm).

**SUMMARY OF THE INVENTION**

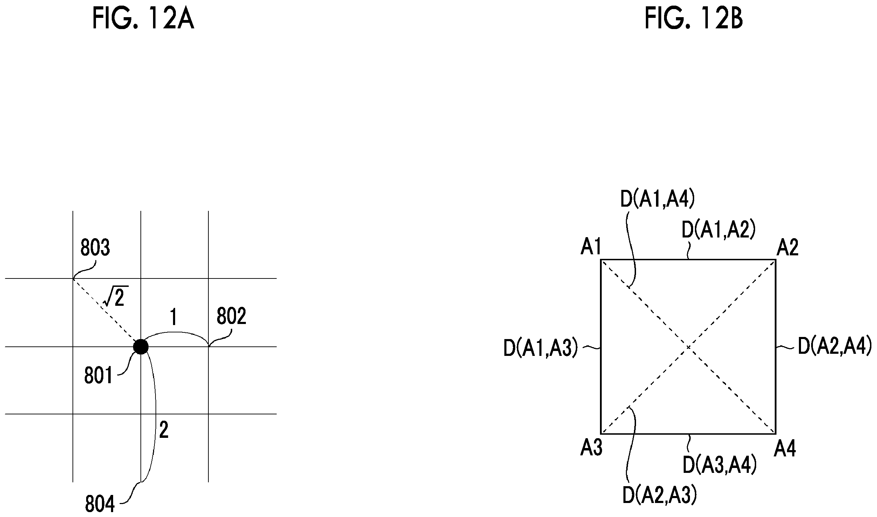

In a case where the SOM described in JP2007-277234A and "self-organizing - automatic classification algorithm", [online], Yuji Ikegaya, [searched on May 7, 2018], Internet (http://gaya.jp/spiking_neuron/som.htm) is used, almost the lattice points of substantially the same reference data may appear at separated locations on the map. For example, cells of "yellow" appear at separated locations on the map even in a result of a simulation (data in each lattice point (cell) is represented by a three-dimensional color vector represented by components of (red (R), green (G), blue (B)) in "self-organizing - automatic classification algorithm", [online], Yuji Ikegaya, [searched on May 7, 2018], Internet (http://gaya.jp/spiking_neuron/som.htm). That is, "even the pieces of data originally having similar properties may be classified as pieces of data of which features are greatly different in the SOM".
As described above, the related art cannot appropriately classify a plurality of pieces of high-dimensional data.
The present invention has been made in view of the above circumstances, and an object of the present invention is to provide a data processing device, a data processing method, a data processing program, and a non-transitory recording medium capable of appropriately classifying a plurality of pieces of high-dimensional data.
In order to achieve the aforementioned object, a data processing device according to a first aspect of the present invention comprises a data input unit that inputs a plurality of pieces of data, an initial value setting unit that sets initial values of reference vectors to all lattice points of a lattice point space including a plurality of lattice points based on the plurality of pieces of data, one lattice point being coupled to all other lattice points in the lattice point space, a distance calculation unit that calculates inter-lattice-point distances between one lattice point and the other lattice points by using a designated distance function based on the initial values of the reference vectors, a search unit that calculates distances between an input vector constituted by components of the plurality of pieces of data and the reference vectors for the lattice points based on the distance function, and searches for a nearest lattice point which is the lattice point of which the distance from the input vector is the shortest based on a result of the calculation, a data allocation unit that allocates, as data for the nearest lattice point, each of the plurality of pieces of data based on a result of the search, a correction vector calculation unit that calculates correction vectors for the reference vectors by using a reflection function for reflecting information on the plurality of pieces of data on the nearest lattice point and the lattice points near the nearest lattice point, a distance update unit that corrects the reference vectors by adding the correction vectors to the reference vectors of the lattice points, and updates the inter-lattice-point distances by using the plurality of pieces of data allocated to the lattice points and the reference vectors, a repetition controller that repeats processing in the search unit, the data allocation unit, the correction vector calculation unit, and the distance update unit for all the plurality of pieces of data and all the plurality of lattice points until a designated end condition is satisfied, and an information output unit that outputs information indicating the inter-lattice-point distances updated by the repetition.
The inventors of the present application have made extensive studies on the problems of the related art (SOM) described above, and have found the knowledge of "the pieces of similar data appears at the separated locations on the map since a specific shape (a square lattice of 10 ×10 in "self-organizing - automatic classification algorithm", [online], Yuji Ikegaya, [searched on May 7, 2018], Internet (http://gaya.jp/spiking_neuron/som.htm)) is set in the lattice point space and the information on the input data is not reflected on the lattice points in a long range". In the data processing device according to the first aspect, the similarity between the pieces of reference data (data allocated to each lattice point) is regarded as the inter-lattice-point distance without assuming a special shape in the lattice point space based on such a knowledge. Specifically, in the SOM, distances between a lattice point 801 and lattice points 802, 803, and 804 are 1, 2^(1/2), and 2, respectively, as shown in Fig. 12A. In the present invention, distances between lattice points A1, A2, A3, and A4 are represented as D(A1, A2) and D(A1, A4) by a function "D(i, j)" (i and j are indices indicating the lattice points) indicating the similarity (D(i, j) is, for example, a function indicating the Euclid distance between the pieces of reference data) as shown in Fig. 12B. In Fig. 12B, the lattice point space is drawn as a square lattice for the sake of convenience. However, D(A1, A2) < D(A1, A4) may not be satisfied, it is difficult to strictly draw a relation between the lattice point distances.

As described above, in the present invention, since one lattice point is coupled to all other lattice points (at the inter-lattice-point distance corresponding to the similarity between the pieces of reference data) and there is no "lattice point that is distant geometrically", information on input data can be reflected on all the lattice points, and the lattice points of substantially the same reference data do not appear at separated locations in the lattice point space. Accordingly, the data processing device according to the first aspect can appropriately classify the plurality of pieces of high-dimensional data. The coupling of the lattice points may be maintained while the update of the inter-lattice-point distance between the lattice points is repeated, and may be decoupled at a stage at which the update is ended and information (for example, a two-dimensional or three-dimensional map) is output.

In the first aspect and the following aspects, the "reference vector" is a vector indicating the feature of the data belonging to the lattice point. Data of which a distance from the reference vector is short is stored at the lattice point having the reference vector, but means that data having features similar to the reference vector is collected at the lattice point. The initial values of the reference vectors can be randomly set. However, in a case where the initial values are randomly set, since there is a possibility that a result obtained by updating the inter-lattice-point distances are different for each processing even though the input data is the same, the initial values of the reference vectors are preferably set according to a predetermined standard. It is more preferable that the initial value reflects a spatial distribution of the input data.

In the first aspect and the following aspects, any function d(x, y) that satisfies the following four conditions for any two points (x, y) or two data groups (X, Y) can be used as the "distance function" (the conditions are the same for the function d(X, Y)).

Condition (1): d(x, y) is non-negative real number
Condition (2): where d(x, y) = 0, x = y
Condition (3): d(x, y) = d(y, x)
Condition (4): d(x, z) + d(z, y) ≥ d(x, y)

In accordance with a data processing device according to a second aspect, in the first aspect, the distance calculation unit calculates the inter-lattice-point distances by using the reference vector of the one lattice point and the reference vectors of the other lattice points, and the search unit calculates the distances by using the input vector and the reference vectors. The second aspect defines one aspect of a method of calculating the inter-lattice-point distances and the distances between the input vector and the reference vectors.

In accordance with a data processing device according to a third aspect, in the first or second aspect, the initial value setting unit sets the initial values of the reference vectors based on statistical features of the data. The third aspect defines one aspect of the initial value setting method, and for example, an average, a variance, and a correlation can be used as the "statistical features". However, the present invention is not limited to these examples. A principal component analysis, a regression analysis, a kernel principal component analysis, and the like can be used as a specific method. In a case where the principal component analysis is used, the initial value setting unit can set the initial values of the reference vectors based on an average vector of the input data, a maximum eigenvalue of a variance-covariance matrix, and an eigenvector corresponding to the maximum eigenvalue. The initial values of the reference vectors may be set by further considering second and third principal components in addition to the maximum eigenvalue (first principal component).

In accordance with a data processing device according to a fourth aspect, in any one of the first to third aspects, the distance function is a function for obtaining a distance between the pieces of data. The "distance between the pieces of data" includes not only a distance for any two points (x, y) but also a distance for two data groups (X, Y). Specifically, for example, a Ward distance, a Euclid distance, a Mahalanobis distance, and other functions used in a cluster analysis can be used as the distance function. These functions are specific examples of the distance functions that satisfy the conditions described above in the first aspect, but the distance function in the data processing device according to the embodiment of the present invention is not limited thereto.

In accordance with a data processing device according to a fifth aspect, in any one of the first to fourth aspects, the correction vector calculation unit calculates the correction vector by using, as the reflection function, a function of which a value decreases as the inter-lattice-point distance increases. In the fifth aspect, the correction vectors are calculated by using, as the reflection function, the function in which a degree of reflection of information decreases as the inter-lattice-point distance increases. Specifically, for example, in a case where the inter-lattice-point distance is d and a range in which the data is reflected is $\sigma$, the correction vectors can be calculated by using the function represented by $\exp(-d/\sigma)$ as the reflection function. However, the present invention is not limited to such an aspect. In this case, $\sigma$ is a constant that defines an influence range of the input data.

In accordance with a data processing device according to a sixth aspect, in any one of the first to fifth aspects, the initial value setting unit sets the initial values of the reference vectors to the lattice points of the lattice point space in which the number of lattice points is less than the number of the plurality of pieces of data. In the sixth aspect, such a condition is set in order to cluster the data.

In accordance with a data processing device according to a seventh aspect, in any one of the first to sixth aspect, the information output unit creates and outputs a lattice point distribution map on which a distribution of the lattice points and the plurality of pieces of data allocated to the lattice points are represented in a two-dimensional space or a three-dimensional space based on the information indicating the inter-lattice-point distances. In the seventh aspect, since the lattice point distribution map in which the distribution of the lattice points is represented in the two-dimensional space or the three-dimensional space (low-dimensional space) is created and output, even though the input data is high-dimensional, the user can easily understand the data distribution.

In accordance with a data processing device according to an eighth aspect, in the seventh aspect, the information output unit sets an initial arrangement of the lattice points in the two-dimensional space or the three-dimensional space, minimizes a designated evaluation function by adjusting the arrangement of the lattice points, and creates and outputs the lattice point distribution map based on the adjusted arrangement. The eighth aspect defines one aspect of a method of creating a low-dimensional lattice point distribution map, and for example, a multidimensional scaling method can be used. However, the invention is not limited thereto. For example, the steepest descent method can be adopted for minimizing the evaluation function, but the invention is not limited thereto.

In accordance with a data processing device according to a ninth aspect, in any one of the first to sixth aspects, the data input unit inputs local stable structures of a compound and energies of the local stable structures in association with each other, and the repetition controller repeats extraction processing of extracting the local stable structures of the compound based on the updated inter-lattice-point distances and decoupling processing of decoupling the lattice points according to the inter-lattice-point distances until a designated number of local stable structures are extracted. The ninth aspect defines one aspect of processing in a case where the local stable structures of the compound are extracted.

In general, compounds can have different structures depending on the environment (temperature, pH, and the like), but a stable structure (structure with low energy) is desired to be acquired in a case where compounds as medicine candidates are searched for, for example. However, since the compound may not have the most stable structure (a structure having the lowest energy) depending on the surrounding environment or the like, it is effective to acquire a large number of local stable structures and extract a plausible structure from the local stable structures. In the data processing device according to the embodiment of the present invention, the lattice points of substantially the same reference data do not appear at the separated locations in the lattice point space as described above for the first aspect, and in the case of the compound, since a case where "even though there is actually one local stable structure, the local stable structures appear at the plurality of lattice points" does not occur, the local stable structure can be accurately extracted.

In the ninth aspect, the "local stable structure" corresponds to the lowest energy between the energy corresponding to one lattice point and the energy of another lattice point directly coupled to the one lattice point. At the start of the extraction processing and the decoupling processing, since one lattice point is coupled to all the other lattice points, the local stable structure is only one most stable structure. However, the number of local stable structures increases as the extraction processing and the decoupling processing are repeated. Thus, the extraction processing and the decoupling processing are repeated until a desired number of local stable structures are extracted. The extraction processing and the decoupling processing can be performed as the processing of the data processing device without creating the map indicating the lattice point space (the map visually recognizable by the user).

In the ninth aspect, any "energy" can be used as long as the energy (or free energy) is derived from the three-dimensional structure of the compound. For example, in the case of quantum scientific calculation, a total electron energy can be used.

In accordance with a data processing device according to a tenth aspect, in the ninth aspect, the repetition controller performs, as the extraction processing, processing of setting, as a representative energy of one lattice point, a minimum energy among the energies of the local stable structures allocated to the one lattice point for the one lattice point, comparing the representative energies between the one lattice point and all other lattice points coupled to the one lattice point, and extracting the local stable structure corresponding to the minimum representative energy based on a result of the comparison. The tenth aspect defines the specific contents of the extraction processing.

In accordance with a data processing device according to an eleventh aspect, in the tenth aspect, the information output unit displays an energy distribution map indicating a correspondence between the lattice points and the representative energies of the lattice points on a display device, the lattice point space being projected in the two-dimensional space or the three-dimensional space according to an arrangement of the lattice points and the inter-lattice-point distances on the energy distribution map. In the eleventh aspect, since the energy distribution map on which the lattice point space is projected in two dimensions or three dimensions (lower-dimensional space than the dimension of the input data) is displayed on the display device, the user can easily visually grasp the scene of the energy distribution (position of the local stable structure).

In accordance with a data processing device according to a twelfth aspect, in the eleventh aspect, the information output unit displays the energy distribution map by using a symbol having a size corresponding to the number of local stable structures allocated to the lattice point and a color corresponding to the representative energy of the lattice point. The twelfth aspect defines a specific display aspect of the energy distribution map, and the user can more easily visually grasp the scene of the energy distribution.

In order to achieve the aforementioned object, a data processing method according to a thirteenth aspect of the present invention is a data processing method of a data processing device that includes a data input unit which inputs data, a data processing unit that processes the input data, and an information output unit that outputs information regarding the processed data. The method comprises a data input step of inputting, by the data input unit, a plurality of pieces of data, an initial value setting step of setting, by the data processing unit, initial values of reference vectors to all lattice points in a lattice point space including a plurality of lattice points based on the plurality of pieces of data, one lattice point being coupled to all other lattice points in the lattice point space, a distance calculation step of calculating, by the data processing unit, inter-lattice-point distances between one lattice point and other lattice points by using a designated distance function based on the initial values of the reference vector, a search step of calculating, by the data processing unit, distances between an input vector constituted by components of the plurality of pieces of data and the reference vectors for the lattice points based on the distance function, and searching for a nearest lattice point which is the lattice point of which the distance from the input vector is the shortest based on a result of the calculation, a data allocation step of allocating, by the data processing unit, as data for the nearest lattice point, the plurality of pieces of data based on a result of the search, a correction vector calculation step of calculating, by the data processing unit, correction vectors for the reference vectors by using a reflection function for reflecting information on the plurality of pieces of data on the nearest lattice point and the lattice points near the nearest lattice point, a distance update step of correcting, by the data processing unit, the reference vectors by adding the correction vectors to the reference vectors of the lattice points, and updating the inter-lattice-point distances by using the data allocated to the lattice points and the reference vectors, a repetition control step of repeating, by the data processing unit, processing in the search step, the data allocation step, the correction vector calculation step, and the distance update step for all the plurality of pieces of data and for all the plurality of lattice points until a designated end condition is satisfied, and an information output step of outputting, by the information output unit, information indicating the inter-lattice-point distances updated by the repetition.

According to the thirteenth aspect, it is possible to appropriately classify the plurality of pieces of high-dimensional data as in the first aspect. The configuration similar to the second to twelfth aspects may be further included in the thirteenth aspect.

In order to achieve the aforementioned object, a data processing program according to a fourteenth aspect of the present invention causes a computer to execute a data input step of inputting a plurality of pieces of data, an initial value setting step of setting initial values of reference vectors to all lattice points of a lattice point space including a plurality of lattice points based on the data, one lattice point being coupled to all other lattice points in the lattice point space, a distance calculation step of calculating inter-lattice-point distances between one lattice point and other lattice points by using a designated distance function based on the initial values of the reference vectors, a search step of calculating distances between an input vector constituted by a plurality of components of the data and the reference vectors for the lattice points based on the distance function, and searching for a nearest lattice point which is the lattice point of which the distance from the input vector is the shortest based on a result of the calculation, a data allocation step of allocating, as data for the nearest lattice point, the data based on a result of the search, a correction vector calculation step of calculating correction vectors for the reference vectors by using a reflection function for reflecting information on the data on the nearest lattice point and the lattice points near the nearest lattice point, a distance update step of correcting the reference vectors by adding the correction vectors to the reference vectors of the lattice points and updating the inter-lattice-point distances by using the data allocated to the lattice points and the reference vectors, a repetition control step of repeating processing in the search step, the data allocation step, the correction vector calculation step, and the distance update step for all the plurality of pieces of data and all the plurality of lattice points until a designated end condition is satisfied, and an information output step of outputting information indicating the inter-lattice-point distances updated by the repetition.

According to the fourteenth aspect, it is possible to appropriately classify the plurality of pieces of high-dimensional data as in the first and thirteenth aspects. The configuration similar to the second to twelfth aspects may be further included in the fourteenth aspect. The "computer" in the fourteenth aspect can be realized by using one or more various processors such as a central processing unit (CPU).

In order to achieve the aforementioned object, a non-transitory recording medium according to a fifteenth aspect of the present invention is a non-transitory recording medium having a computer-readable code of the data processing program according to the fourteenth aspect recorded thereon. In the non-transitory recording medium according to the fifteenth aspect, a code for a program further including the configurations according to the second to twelfth aspects in addition to the fourteenth aspect may be recorded.

As described above, in accordance with the data processing device, the data processing method, the data processing program, and the non-transitory recording medium according to the embodiment of the present invention, it is possible to appropriately classify the plurality of pieces of high-dimensional data.

## BRIEF DESCRIPTION OF THE DRAWINGS

Fig. 1 is a block diagram showing a configuration of a data processing device according to a first embodiment.
Fig. 2 is a block diagram showing a configuration of a processing unit.
Fig. 3 is a diagram showing information stored in a storage unit.
Fig. 4 is a flowchart showing a procedure of a data processing method.
Fig. 5 is a table showing iris data.
Fig. 6 is a diagram showing a distribution of the iris data.
Fig. 7 is a diagram showing a scene in which data is allocated to a lattice point.
Fig. 8 is a flowchart showing a procedure for creating a lattice point distribution map.
Fig. 9 is a diagram showing a scene in which a distribution map is created.
Fig. 10 is the distribution map for the iris data.
Figs. 11A and 11B are diagrams showing classification results of the iris data according to the related art and an embodiment of the present invention.
Figs. 12A and 12B are diagrams showing inter-lattice-point distances according to the related art and the embodiment of the present invention.
Fig. 13 is a diagram showing a scene in which classification progresses as processing is repeated.
Fig. 14 is a conceptual diagram showing an energy curved surface of a compound.
Fig. 15 is a flowchart showing a procedure for extracting a local stable structure.
Fig. 16 is a diagram for describing extraction of the local stable structure.
Figs. 17A to 17C are other diagrams for describing the extraction of the local stable structure.
Fig. 18 is a diagram showing a result obtained by classifying three-dimensional structures of $C_{12}$ by a method according to the embodiment of the present invention.
Figs. 19A and 19B are diagrams showing a structure of alanine dipeptide and a distribution of three-dimensional structure thereof.
Figs. 20A and 20B are diagrams showing a free energy curved surface of an alanine dipeptide.
Figs. 21A and 21B are diagrams showing a classification result according to the related art.
Figs. 22A and 22B are diagrams showing a classification result by the method according to the embodiment of the present invention.
Fig. 23 is a diagram showing a configuration of a processing unit of a search device of a molecular stable structure.
Fig. 24 is a diagram showing information stored in a storage unit of the search device of the molecular stable structure.
Fig. 25 is a flowchart showing a procedure of a search method of a molecular stable structure.

## DESCRIPTION OF THE PREFERRED EMBODIMENTS

Hereinafter, an embodiment of a data processing device, a data processing method, a data processing program, and a non-transitory recording medium according to an embodiment of the present invention will be described in detail with reference to the accompanying drawings. In the following description, the data processing method according to the embodiment of the present invention may be referred to as a "self-constructing topological map (SCTM) method".

<First embodiment

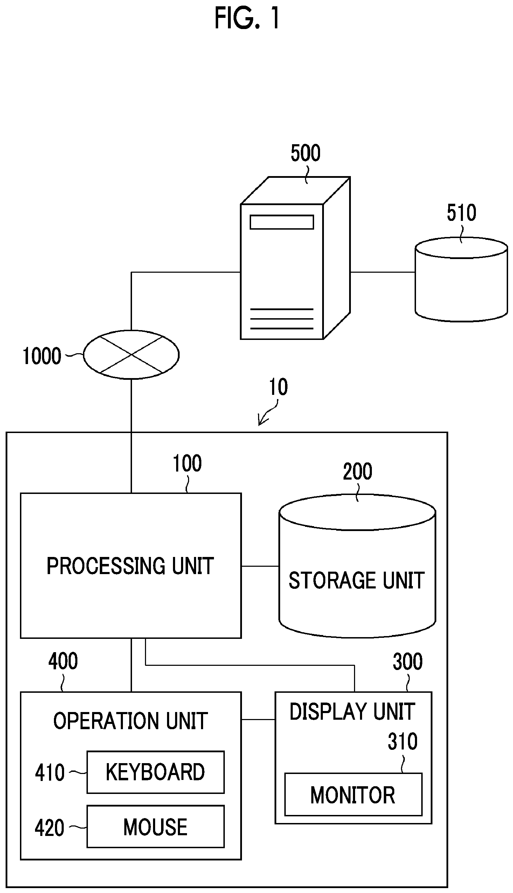

Fig. 1 is a block diagram showing a configuration of a data processing device 10 (data processing device) according to a first embodiment. As shown in Fig. 1, the data processing device 10 includes a processing unit 100, a storage unit 200, a display unit 300, and an operation unit 400 which are connected to each other, and transmits and receives necessary information. Various installation forms can be adopted for these constituent elements. The constituent elements may be installed at one location (in one housing, one room, or the like), or may be installed at a separated location and may be connected via a network. The data processing device 10 is connected to an external server 500 and an external database 510 via a network 1000 such as the Internet, and can acquire necessary information such as input data.

<Configuration of processing unit>

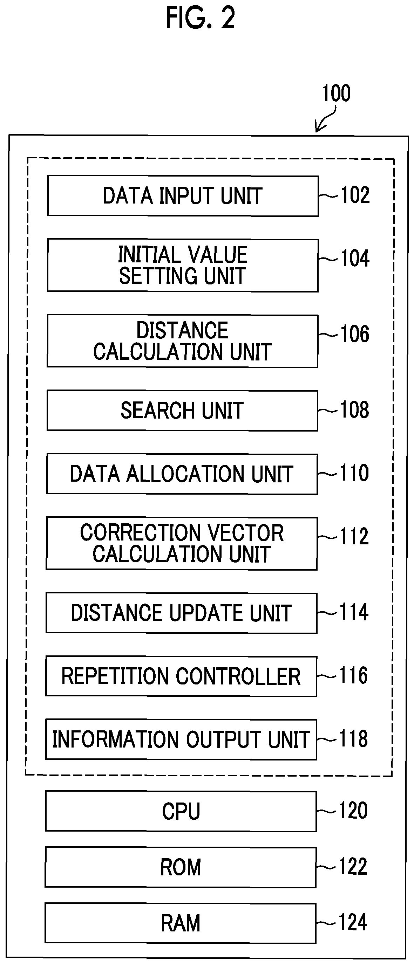

Fig. 2 is a diagram showing a configuration of the processing unit 100. The processing unit 100 includes a data input unit 102 (data input unit), an initial value setting unit 104 (initial value setting unit), a distance calculation unit 106 (distance calculation unit), a search unit 108 (search unit), a data allocation unit 110 (data allocation unit), a correction vector calculation unit 112 (correction vector calculation unit), a distance update unit 114 (distance update unit), a repetition controller 116 (repetition controller), an information output unit 118 (information output unit), a central processing unit (CPU) 120, a read only memory (ROM) 122, and a random access memory (RAM) 124. The data input unit 102 constitutes a data input unit, the initial value setting unit 104, the distance calculation unit 106, the search unit 108, the data allocation unit 110, the correction vector calculation unit 112, the distance update unit 114, and the repetition controller 116 constitute a data processing unit, and the information output unit 118 constitutes an information output unit. Details of a procedure of data processing using the units of the processing unit 100 will be described later. The processing in each unit is performed under the control of the CPU 120.

Functions of the units of the processing unit 100 described above can be realized by using various processors. The various processors include, for example, a CPU that is a general-purpose processor that realizes various functions by executing software (program). The various processors described above include a graphics processing unit (GPU) specialized for image processing and a programmable logic device (PLD) which is a processor capable of changing a circuit configuration after a field programmable gate array (FPGA). A dedicated electric circuit which is a processor having a circuit configuration specifically designed to execute specific processing such as an application specific integrated circuit (ASIC) is also included in the various processors described above.

The functions of the units may be realized by one processor, or may be realized by a plurality of processors of the same type or different types (for example, a plurality of FPGAs, a combination of a CPU and a FPGA, or a combination of a CPU and a GPU). A plurality of functions may be realized by one processor. As an example in which the plurality of functions is realized by one processor, firstly, one processor is constituted by a combination of one or more CPUs and software as represented by a computer such as a client or a server, and this processor is realized as the plurality of functions. Secondly, a processor that realizes the functions of the entire system by one integrated circuit (IC) chip is used as represented by a system on chip (SoC). As described above, various functions are realized by using one or more of the various processors described above as a hardware structure. The hardware structure of these various processors is, more specifically, an electric circuitry in which circuit elements such as semiconductor elements are combined.

In a case where the processor or electric circuitry described above executes software (program), a processor-readable code (computer-readable code) of the software to be executed is stored in a non-transitory recording medium such as the ROM 122 (see Fig. 2), and the processor refers to the software. The software stored in the non-transitory recording medium includes a program (data processing program) for executing a data processing method according to the embodiment of the present invention. The code may be recorded in the non-transitory recording medium such as various magneto-optical recording devices and semiconductor memories instead of the ROM 122. In the case of processing using software, for example, the RAM 124 is used as a temporary storage region, and data stored in, for example, an electronically erasable and programmable read only memory (EEPROM) (not shown) can be referred to.

<Configuration of storage unit>

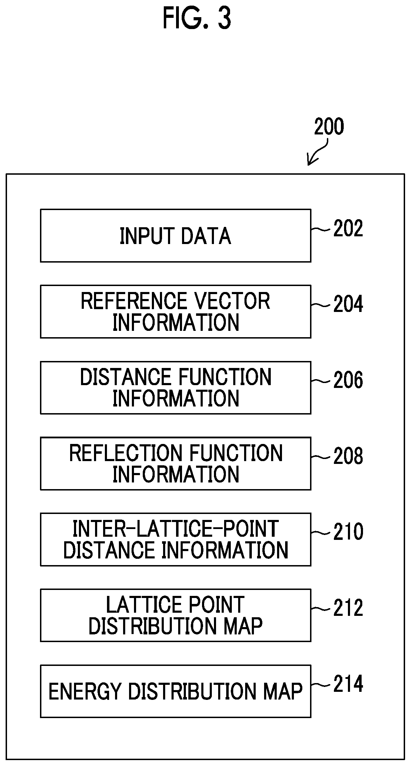

The storage unit 200 is constituted by a non-transitory recording medium such as a digital versatile disk (DVD), a hard disk, and various semiconductor memories, and a controller thereof, and can store, for example, information (input data 202, reference vector information 204, distance function information 206, reflection function information 208, inter-lattice-point distance information 210, a lattice point distribution map 212, and an energy distribution map 214) shown in Fig. 3.

Configuration of display unit and operation unit>

The display unit 300 includes a monitor 310 (display device), and can display an input image, information stored in the storage unit 200, a result of processing performed by the processing unit 100, and the like. The operation unit 400 includes a keyboard 410 and a mouse 420 as an input device and/or a pointing device, and a user can perform operations necessary for executing the data processing method according to the embodiment of the present invention via these devices and screens of the monitor 310. Operations executable by the user can include, for example, designations of a method of setting initial values of reference vectors, a distance function, and a reflection function.

<Procedure of data processing method>

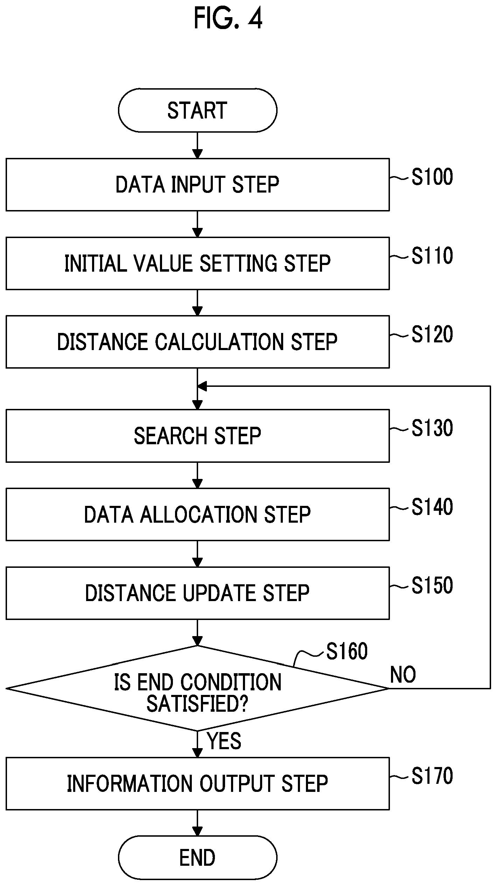

Fig. 4 is a flowchart showing a procedure of the data processing method according to the embodiment of the present invention. This flowchart will be described using a specific example.

<Example 1: classification of iris data>

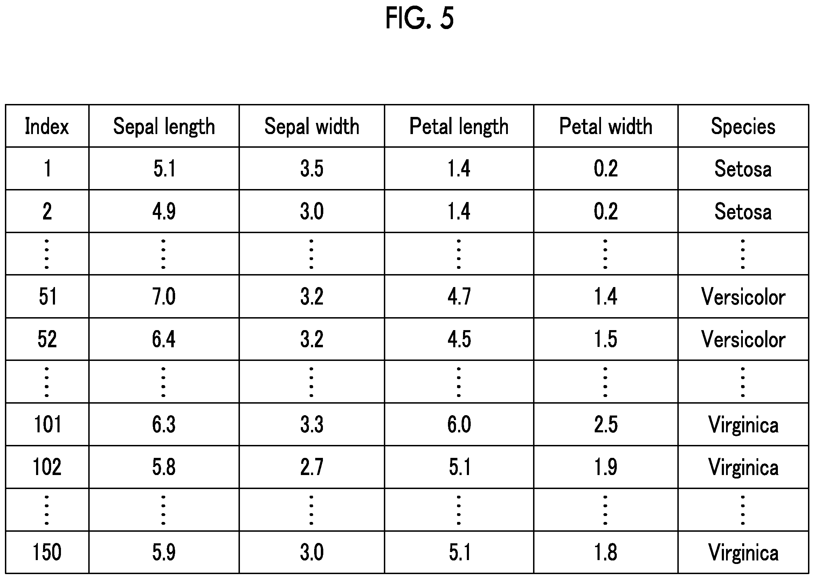

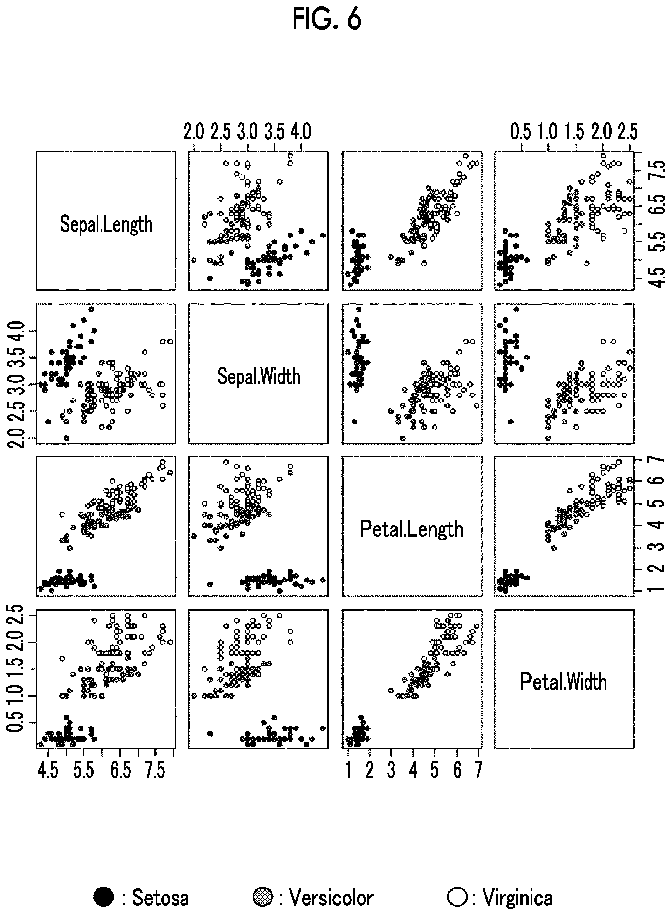

Iris data is publicly known data regarding sepals and petals of three types of irises (setosa, versicolor, and virginica) (for example, available from https://archive.ics.uci.edu/ml/machine-learning-databases/iris/), and include a total of 150 pieces of data by 50 pieces for each type of iris. Fig. 5 is a table showing a part of the iris data. For example, the iris data is plotted as shown in Fig. 6 (the source is https://commons.wikimedia.org/wiki/File:Iris_dataset_scatterplot.svg). Each data can be considered as a vector (high-dimensional data) having a total of four dimensions, lengths and widths of the sepal and the petal. In the plotting of the iris data, the setosa is plotted in blue, the versicolor is plotted in green, and the virginica is plotted in red in the above-mentioned source. However, since it is difficult to display the colors in the drawing, the setosa is plotted with black circles, the versicolor is plotted with dark gray circles, and the virginica are plotted with white circles in Fig. 6.

<Input of data>

The data input unit 102 inputs the iris data described above (step S100: data input step). The iris data stored as the input data 202 in the storage unit 200 may be input, or may be read from a recording medium (not shown). Alternatively, the iris data may be acquired from the external server 500 and the external database 510 via the network 1000.

<Setting of initial value of reference vector>

The initial value setting unit 104 sets the initial values of the reference vectors to all lattice points in a lattice point space including a plurality of lattice points based on a plurality of pieces of data, and in the lattice point space, one lattice point is coupled to all other lattice points (step S110: initial value setting step). The reference vector is a vector representing a feature of the data belonging to the lattice point. In Example 1, the number of lattice points is four. From the viewpoint of classifying (clustering) data, it is preferable that (number of lattice points < number of data). A scene of the lattice point space in a case where the number of lattice points is four is as shown in Fig. 12B (conceptual diagram).
The initial value setting unit 104 can set the initial values of the reference vectors based on, for example, a result obtained by analyzing a principal component of the input data. In the case of the iris data, an average vector <x>, a maximum eigenvalue (first principal component) $\lambda$ of a variance-covariance matrix, and an eigenvector X are as in the following Equations (1) to (3). The principal component analysis is an example of the method of setting the initial value based on statistical features of the input data, and the average vector, the first principal component, the eigenvector, and the like are examples of the statistical features of the input data.
[Equation 1]

$$\langle \mathbf{x} \rangle = (5.84, 3.05, 3.76, 1.20) \qquad (1)$$

[Equation 2]

$$\lambda = 4.22 \qquad (2)$$

[Equation 3]

$$\mathbf{X} = \left(-0.36, 0.08, -0.86, -0.36\right) \qquad (3)$$

Reference vectors for lattice points 1 to 4 are set as in the following Equation (4) by using these equations. In Equation (4), N = 4, and i is an integer of 1 to 4.

[Equation 4]

$$\mathbf{r}_i = \langle \mathbf{x} \rangle + \sqrt{\lambda}\left(\frac{2(i-1)}{N-1} - 1\right)\mathbf{X} \qquad (4)$$

The reference vectors for the lattice points 1 to 4 can be specifically expressed as in the following Equations (5) to (8).

[Equation 5]

$$\mathbf{r}_1 = \langle \mathbf{x} \rangle - \sqrt{\lambda}\mathbf{X} \qquad (5)$$

[Equation 6]

$$\mathbf{r}_2 = \langle \mathbf{x} \rangle - \frac{1}{3}\sqrt{\lambda}\mathbf{X} \qquad (6)$$

[Equation 7]

$$\mathbf{r}_3 = \langle \mathbf{x} \rangle + \frac{1}{3}\sqrt{\lambda}\mathbf{X} \qquad (7)$$

[Equation 8]

$$\mathbf{r}_4 = \langle \mathbf{x} \rangle + \sqrt{\lambda}\mathbf{X} \qquad (8)$$

Although only the first principal component is considered in the above-described example, the initial values may be set in consideration of second and third principal components. A method other than the principal component analysis (for example, a method based on statistical features of data such as regression analysis or kernel principal component analysis) may be used to set the initial values. The methods and setting conditions used for setting the initial values may be determined according to an operation of the user. It is preferable that the method of setting the initial value reflects a spatial distribution of the input data.

<Calculation of inter-lattice-point distance>

The distance calculation unit 106 calculates an inter-lattice-point distance between one lattice point and another lattice point by using a designated distance function based on the initial values of the reference vectors set in step S110 (step S120: distance calculation step). The distance function is a function for obtaining a distance between the pieces of data (including a distance for two data groups (X, Y) in addition to a distance between any two points (x, y)). A function for obtaining a Ward distance is considered as the distance function D in Example 1. However, a function for obtaining a Euclid distance, a Mahalanobis distance, or another function used in cluster analysis may be used. The distance function to be used may be determined according to the operation of the user.

In a case where a lattice point i and a lattice point j are given, the number of pieces of data belonging to the lattice points are $N_i$ and $N_j$, respectively, and in a case where centers of mass of the data belonging to the lattice points are $c_i$ and $c_j$, the Ward distance is given in the following Equation (9). Equation (9) means that the distance between the data groups belonging to the lattice points i and j is obtained.

[Equation 9]

$$D(i,j) = \frac{N_i N_j}{N_i + N_j}\left(\mathbf{c}_i - \mathbf{c}_j\right)^2 \qquad (9)$$

From the definition, in a case where the vector is regarded as the lattice point at which the number of data is 1, a Ward distance between a vector a and a vector b is given in the following Equation (10).

[Equation 10]

$$D(\mathbf{a},\mathbf{b}) = \frac{1}{2}\left(\mathbf{a} - \mathbf{b}\right)^2 \qquad (10)$$

Since only the pieces of data of the reference vectors $r_1$ to $r_4$ are respectively allocated to the lattice points at a point in time of step S120, the distance calculation unit 106 can calculate the Ward distance by the following Equation (11). Equation (11) indicates the distance between the lattice point 1 and the lattice point 2, but the distances for other lattice points can be similarly calculated.

[Equation 11]

$$D(i,j) = D(\mathbf{r}_1,\mathbf{r}_2) = \frac{1}{2}\left(\mathbf{r}_1 - \mathbf{r}_2\right)^2 \qquad (11)$$

<Search for nearest lattice point>

The search unit 108 searches for a nearest lattice point which is a lattice point having the shortest distance based on a calculation result of the distance described above (a distance between the input vector and the reference vector constituted by components of the input data) for the input data (step S130: search step). For example, in a case where an input vector of a first data of an iris ($x_1$ = (5.1, 3.5, 1.4, 0.2)), the Ward distance of each lattice point from the reference vector can be calculated as in the following Equations (12) to (15).

[Equation 12]

$$D(\mathbf{x}_1,\mathbf{r}_1) = 11.29 \qquad (12)$$

[Equation 13]

$$D(\mathbf{x}_1,\mathbf{r}_2) = 5.73 \qquad (13)$$

[Equation 14]

$$D(\mathbf{x}_1,\mathbf{r}_3) = 2.05 \qquad (14)$$

[Equation 15]

$$D(\mathbf{x}_1,\mathbf{r}_4) = 0.25 \qquad (15)$$

From Equations (12) to (15), the lattice point having the reference vector of which the distance from the input vector $x_1$ is the shortest is the lattice point 4. That is, the nearest lattice point which is the lattice point of which the distance from the input vector $x_1$ is the shortest is the lattice point 4. The distances from the lattice points 1 to 4 are similarly calculated for second to 150th data (input vectors), and the nearest lattice point is searched for.

<Allocation of data>

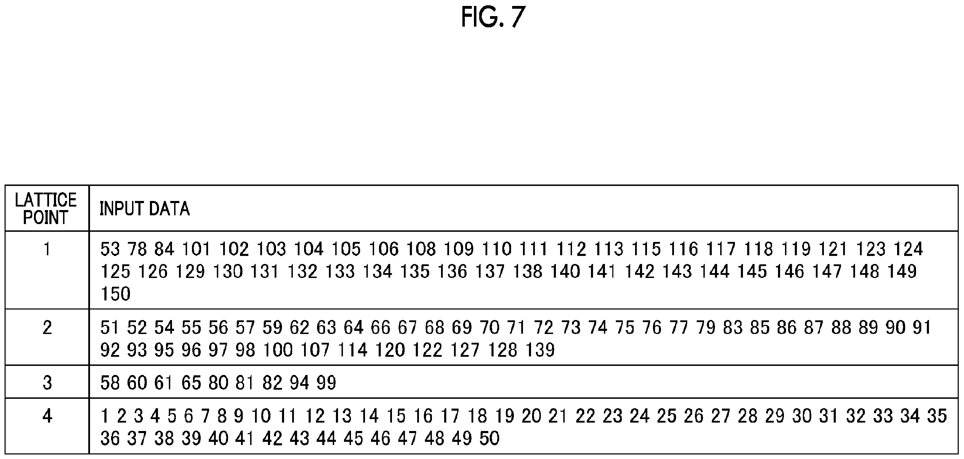

The data allocation unit 110 allocates the input vector $x_1$ (first input data) as data for the lattice point 4 which is the nearest lattice point based on the result of the search in step S130 (step S140: data allocation step). The second to 150th data are also allocated as the data for the nearest lattice point. As a result, the input data is classified as shown in a table of Fig. 7.

<Calculation of correction vector and update of inter-lattice-point distance>

The correction vector calculation unit 112 calculates correction vectors for the reference vectors by using the reflection function that reflects information on the input data (the plurality of pieces of data) on the nearest lattice point and the lattice points near the nearest lattice point (step S150: distance update step). Specifically, the correction vector calculation unit 112 calculates the correction vectors by the following Equation (16).
[Equation 16]

$$\delta \mathbf{r}_i = \frac{1}{N_D} \sum_{j=1}^{N} \sum_{k \in C_j} f\left(D(i,j); \sigma\right)\left(\mathbf{x}_k - \mathbf{r}_j\right) \qquad (16)$$

In Equation (16), $N_D$ is the total number of data (= 150), and $C_j$ is a set of the input data stored in the lattice point j (for example, a set of 58th, 60th, ... and 99th data for the lattice point 3 in Fig. 7). In Equation (16), i and j are indices indicating the lattice points, and k is an index indicating the input data.

In Equation (16), f is a reflection function that reflects the information on the input data (the plurality of pieces of data) on the nearest lattice point and the lattice points near the nearest lattice point and is an exponential function defined by the following Equation (17) in Example 1. However, this function is not limited thereto.
[Equation 17]

$$f(d; \sigma) = \exp\left[-\frac{d}{\sigma}\right] \qquad (17)$$

The reflection function of Equation (17) is a function of which a value decreases as d (inter-lattice-point distance) increases. Since the Ward distance described above has a dimension of the square of the Euclid distance, the definition of Equation (17) can be regarded as a Gauss function for the Euclid distance. $\sigma$ is a constant that defines an influence range of the input data, and can be given by the following Equation (18) by using an appropriate coefficient $r_\sigma$. Accordingly, the coefficient $r_\sigma$ is also any constant. Hereinafter, although it will be described in Example 1 that $r_\sigma = 0.1$, the coefficient is not limited to this value.
[Equation 18]

$$\sigma = r_\sigma \max\left(D(\mathbf{x}_1, \mathbf{x}_2), D(\mathbf{x}_1, \mathbf{x}_3), ...\right) \qquad (18)$$

The reflection function may be a function of which a value decreases in inverse proportion to the distance such as (1/d) instead of the exponential function shown in Equation (17). In the case of the function such as (1/d), a degree of decrease in the value due to an increase in the inter-lattice-point distance is less than that of the exponential function shown in Equation (17), and the influence of the input data can be strongly exerted far away.

<Update of inter-lattice-point distance>

The distance update unit 114 corrects the reference vectors by adding the correction vectors to the reference vectors of the lattice points (step S150: distance update step). For example, the reference vector $r_1$ of the lattice point 1 is corrected as in the following Equation (19).
[Equation 19]

$$\mathbf{r}_1 = (6.59, 2.88, 5.52, 1.94) \rightarrow \mathbf{r}_1 + \delta\mathbf{r}_1 = (6.47, 2.91, 5.26, 1.83) \quad (19)$$

The distance update unit 114 similarly corrects the reference vectors $r_2$ to $r_4$ of the lattice points 2 to 4 (step S150: distance update step).

The distance update unit 114 updates the inter-lattice-point distance by using the input data (the plurality of pieces of data) allocated to the lattice points 1 to 4 and the reference vectors $r_1$ to $r_4$ (step S150: distance update step). For example, the distance between the lattice points 1 and 2 ($D(1, 2)$) will be described. As shown in Fig. 7, since 46 pieces of input data are allocated to lattice point 1 and 45 pieces of input data are allocated to the lattice point 2, $N_1 = 47$ and $N_2 = 46$ (the number of input data + the number of reference vectors (one)), and the inter-lattice-point distance is updated as in the following Equation (20) as described above in Equation (9).

[Equation 20]

$$D(1,2) = \frac{47 \times 46}{47 + 46}\left[\frac{\sum_{i \in C_1} \mathbf{x}_i + \mathbf{r}_1}{47} - \frac{\sum_{i \in C_2} \mathbf{x}_i + \mathbf{r}_2}{46}\right]^2 \quad (20)$$

The distance update unit 114 similarly updates other inter-lattice-point distances (step S150: distance update step).

<Repetition control>

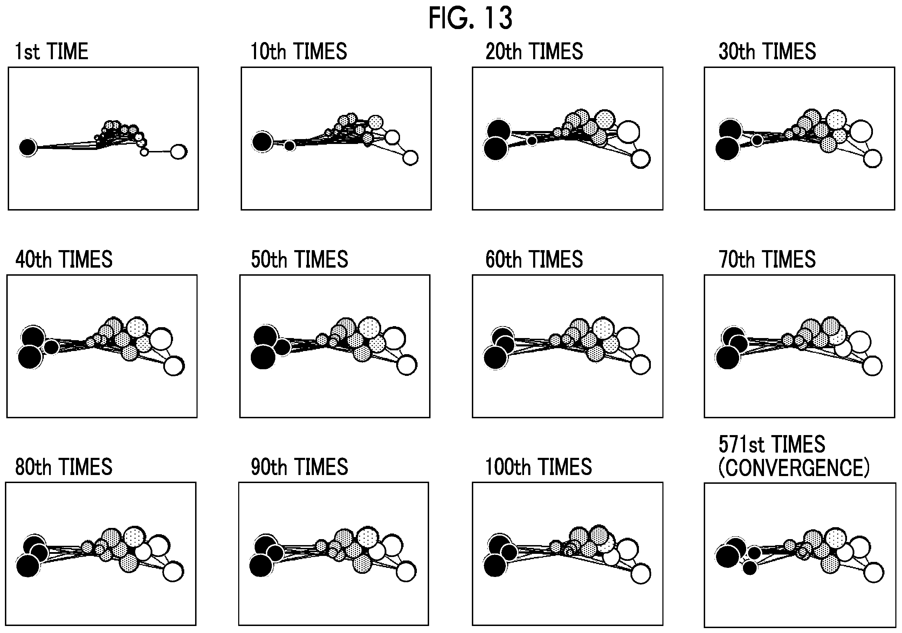

Until a designated end condition is satisfied (until the determination in step S160 becomes YES), the repetition controller 116 repeats the processing of the search unit 108, the data allocation unit 110, the correction vector calculation unit 112, and the distance update unit 114 (the search step, the data allocation step, the correction vector calculation step, and the distance calculation step) for all the pieces of input data (the plurality of pieces of data) and all the plurality of lattice points (step S160: repetition control step). The data to be allocated to each lattice point changes as these kinds of processing are repeated (see Fig. 13). The number of times of the repetition, a processing time, the amount of change in the inter-lattice-point distance before and after the repetition (for example, the amount of change is equal to or less than a threshold value) can be used as the end condition, and the end condition may be determined according to the operation of the user.

In a case where the reflection function is a function of which a value decreases rapidly as an increase in the inter-lattice-point distance (for example, in a case where the reflection function is the exponential function of Equation (17)), processing of decoupling the lattice points of which the inter-lattice-point distance is sufficiently large and reflecting the influence of the input data may be skipped. However, since it is necessary to recouple the lattice points in a case where the inter-lattice-point distance becomes closer, it is necessary to calculate the inter-lattice-point distance itself for all the combinations every time. It is possible to reduce computation cost by such decoupling or recoupling.

<Output of information on inter-lattice-point distance>

The information output unit 118 outputs information indicating the inter-lattice-point distance updated by the repetition described above (step S170: information output step). The output can be performed by a combination of characters, numbers, figures, symbols, colors, and the like, can be stored in the storage unit 200 (for example, stored as the lattice point distribution map 212; see Fig. 3), and can be displayed on the monitor 310. Although it will be described in Example 1 that the lattice point distribution map is created and displayed, the creation and display of the distribution map may be omitted as unnecessary (for example, in a case where only a local stable structure is obtained in Example 2 to be described later).

<Creation and display of lattice point distribution map>

A case where the lattice point distribution map is created as the information indicating the inter-lattice-point distance in step S170 will be described. The lattice point distribution map is a map in which the distribution of the lattice points (arrangement and distance) and the input data allocated to the lattice points are represented in a two-dimensional space or a three-dimensional space based on the information indicating the inter-lattice-point distance by the following method. In Example 1, a case where the two-dimensional distribution map is created by a multidimensional scaling method will be described.

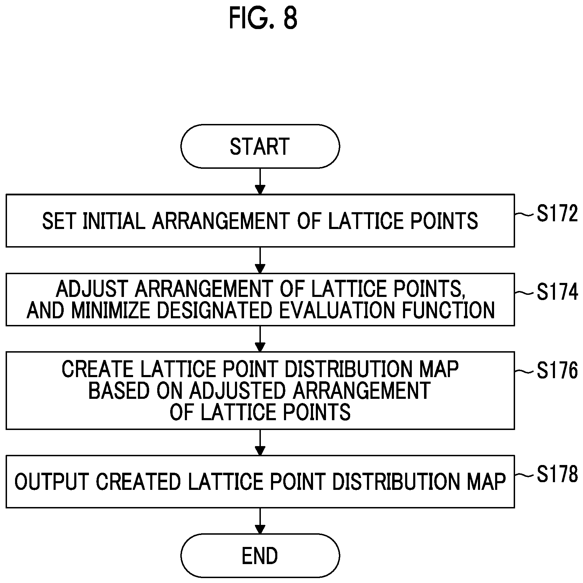

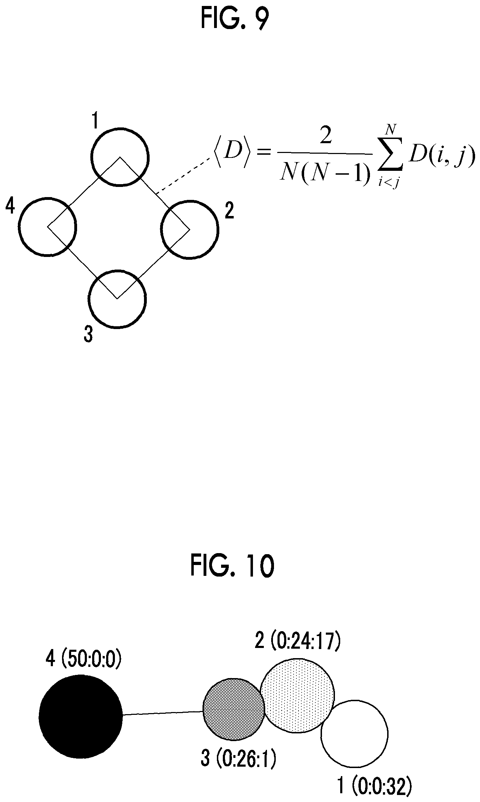

Fig. 8 is a flowchart showing processing of creating the lattice point distribution map (an example of specific processing in step S170). The information output unit 118 sets an initial arrangement of the lattice points in the two-dimensional space (step S172: initial arrangement setting step). Specifically, the four lattice points described above are arranged in a circle at intervals of the average value <D> of the inter-lattice-point distance as shown in Fig. 9. The information output unit 118 sets a square error evaluation function as shown in the following Equation (21) between the lattice points.

[Equation 21]

$$E(i, j) = \left( d(i, j) - D(i, j) \right)^2 \qquad (2\ 1)$$

In Equation (21), d(i, j) is the Euclid distance on the lattice point distribution map, and D(i, j) is the Ward distance described above.

The information output unit 118 adjusts the arrangement (initial arrangement) of the lattice points, and minimizes the designated evaluation function (step S174: minimization step). For example, the function represented by the following Equation (22) can be used as the evaluation function.

[Equation 22]

$$E_{total} = \sum_{i < j}^{N} E(i, j) \qquad (2\ 2)$$

For example, a steepest descent method can be used as the method of minimizing the evaluation function, but the invention is not limited thereto. Various methods can be used as a method for solving a minimization problem.

The information output unit 118 creates the lattice point distribution map based on the adjusted arrangement (step S176: lattice point distribution map creation step), and outputs the created lattice point distribution map (step S178: lattice point distribution map output step). In the creation of the lattice point distribution map in step S176, each lattice point can be represented by a symbol (here, a circle) having a size corresponding to the number of input data allocated to the lattice points. The lattice points can be colored in any color. For example, in the distribution map of the iris data (reference originals shown in the source of Fig. 6 described above), the lattice points can be colored so as to correspond to the original in which blue: setosa, green: versicolor, and red: virginica. Specifically, the lattice points 1 to 4 can be colored in red, green, yellow, and blue, respectively.

The lattice point distribution map created in this manner is shown in Fig. 10. However, since it is difficult to display the colors in the drawing, red, green, yellow, and blue are displayed in black, dark gray, light gray (hatched by dots), and white, respectively in Fig. 10. The information output unit 118 can display this lattice point distribution map on the monitor 310 (display device). In Fig. 10, the numbers 1 to 4 indicate lattice point numbers, and numbers in parentheses indicate the number of input data stored in each lattice point (from left to right: blue (setosa), green (versicolor), and red (virginica)). For example, 50 pieces of data on the setosa are allocated to the lattice point 4, 24 pieces of data on the versicolor, and 17 pieces of data on the virginica are allocated to the lattice point 2. This means that the data on the versicolor and the data on the virginica are mixed. Actually, the spatial distribution of the original iris data (see Fig. 6) also has such a result. As described above, a classification result that appropriately reflects an actual spatial distribution is obtained by the data processing device 10, the data processing method, the data processing program, and the non-transitory recording medium according to the embodiment of the present invention.

<Comparison with SOM>

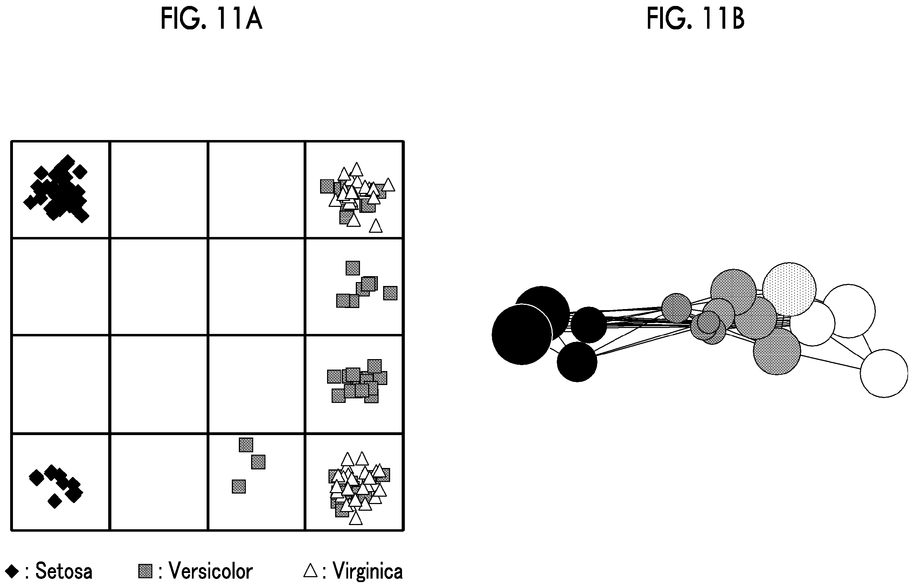

A result obtained by comparing the classification result according to the embodiment of the present invention with a classification result of the related art (SOM) will be described. Although the input data is the iris data described above, Figs. 11A and 11B show classification results in the related art (SOM) and the present invention (SCTM method) with 16 lattice points. Fig. 11A is the classification result using the SOM. The data on the setosa (blue in the plotting of the original, but displayed as a black diamond) or the data on the virginica (red in the plotting of the original, but displayed as a white triangle) are allocated into separated lattice points. Meanwhile, Fig. 11B shows the classification result using the SCTM method, and the classification that appropriately reflects the actual spatial distribution is obtained.

<Scene of progress of classification>

As described above, in the data processing method according to the embodiment of the present invention, these kinds of processing of search, data allocation, correction vector calculation, and distance update (steps S130 to S150 in Fig. 4) are repeated until the designated end condition is satisfied. Fig. 13 shows a relation between the number of times these kinds of processing of steps S130 to S150 are performed on the result of the SCTM method shown in Fig. 11B and the classification result at this point in time. In Fig. 13, it can be seen that the classification progresses as these kinds of processing are repeated. Since the classification is converged at a point in time at which the number of times of the repetition is 571, the processing is ended. That is, in this example, the end condition is "convergence of classification", but another condition may be used as the end condition.

As described above, according to the data processing device 10, the data processing method, the data processing program, and the non-transitory recording medium according to the first embodiment, it is possible to appropriately classify a plurality of pieces of high-dimensional data.

<Example 2: extraction of local stable structure of compound>

In general, compounds (molecules) can have different structures depending on the environment (temperature, pH, and the like), but a stable structure (structure with low energy) is desired to be acquired in a case where compounds as medicine candidates are searched for, for example. However, since the compound may not have the most stable structure (a structure having the lowest energy) depending on the surrounding environment or the like, it is effective to acquire a large number of local stable structures and extract a plausible structure from the local stable structures. Since the acquisition of the local stable structures can be achieved by, for example, a method to be described later, a "method of extracting a plausible structure from the acquired local stable structures" becomes a problem.

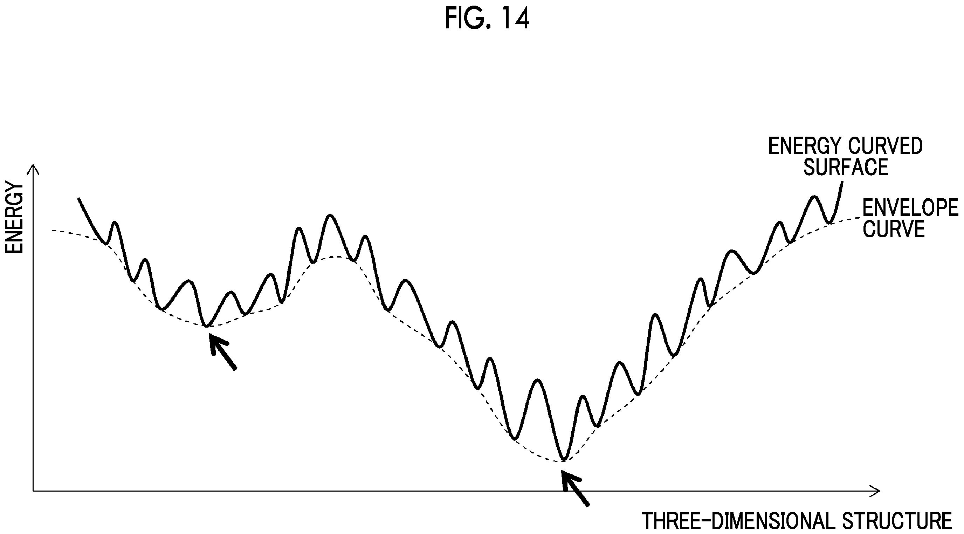

Fig. 14 is a conceptual diagram showing a relation between a three-dimensional structure of the compound and energy (actually, the three-dimensional structure is multidimensional data. In Fig. 14, this multidimensional data is taken as a horizontal axis for the sake of convenience). Although an actual energy curved surface changes intricately as shown in Fig. 14, the three-dimensional structure present on a slope of an envelope curve of the local stable structure falls (changes) to the local stable structure on the envelope curve (actually an envelope surface) due to thermal fluctuation. Accordingly, it is considered that the local stable structure on the envelope curve (a portion indicated by an arrow in Fig. 14) may be extracted as the "plausible structure". Hereinafter, a method of extracting the local stable structure on the envelope curve by the data processing device, the data processing method, the data processing program, and the non-transitory recording medium according to the embodiment of the present invention will be described. The extraction of the local stable structure on the envelope curve can be performed by the data processing device 10 described above. A procedure of extraction processing can be performed similarly to the procedure described with reference to the flowchart of Fig. 4 in a case where the conditions such as the number of dimensions of the input data and the number of lattice points are taken into consideration. Hereinafter, the processing specific to the extraction of the local stable structure will be mainly described.

<From input of data to update of inter-lattice-point distance>

The data input unit 102 inputs the local stable structure of the compound and the energy of the local stable structure in association with each other (step S100: data input step). The local stable structure of the compound and the energy thereof can be obtained, for example, by a method to be described later (see a term "search for local stable structure of compound"). The dimension of the data to be input is a dimension of the number of internal coordinates such as a dihedral angle of the compound (molecule), and the more the complicated structure, the higher the dimension of the compound. Any energy can be used as the energy of the compound as long as the energy originates from the three-dimensional structure of the compound (or free energy). The number of data (local stable structures) to be input is optional, but, for example, about 1000 to 10000 pieces of data can be input. In a case where N local stable structures are input, the number of lattice points is preferably smaller than N. For example, in a case where N = 1000, the number of lattice points can be 100. However, the number of lattice points is not limited thereto.

Since these kinds of processing of steps S110 to S150 can be performed similarly to Example 1 described above except for a difference in the dimension of the data and the number of data, detailed description will be omitted.

<Extraction of local stable structure>

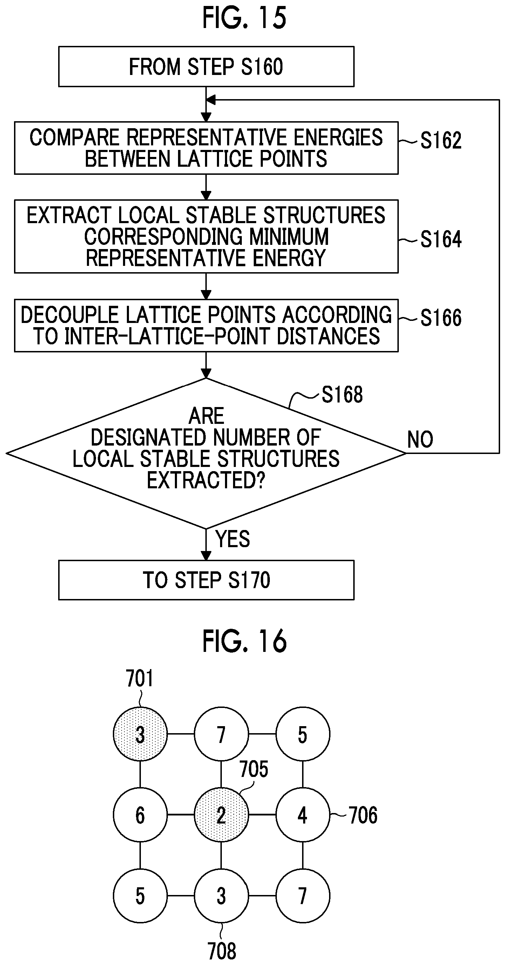

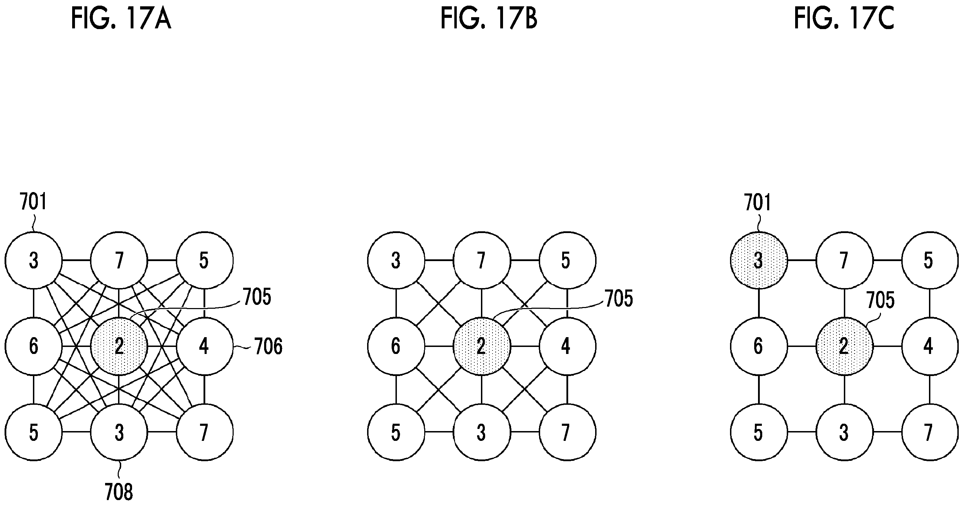

The local stable structure in the lattice point space (a state in which the inter-lattice-point distance is updated by the processing up to step S150) is defined as a structure that has (1) the lowest energy among the structures allocated to a certain lattice point and has (2) lower energy than the structures belonging to all the other lattice points connected to the certain lattice point. For example, in the case of the lattice point space shown in Fig. 16, the structure allocated to lattice points 701 and 705 is the local stable structure. In Fig. 16. circles indicate the lattice points, and lines between the lattice points indicate that the lattice points are coupled to each other. A number in the circle indicates the minimum energy among the energies of the local stable structure allocated to the lattice point (hereinafter, referred to as "representative energy" of the lattice point). In the SCTM method, one lattice point is coupled to all the other lattice points in the lattice point space at a point in time at which the extraction of the local stable structure is started as shown in Fig. 17A. In this state, the local stable structure is only one most stable structure allocated to the lattice point 705.

Fig. 15 is a flowchart showing the extraction processing of the local stable structure. The repetition controller 116 compares the representative energies between one lattice point and all the other lattice points coupled to the one lattice point (step S162: extraction processing step), and extracts the local stable structure corresponding to the minimum representative energy based on the comparison result (step S164: extraction processing step). In the state shown in Fig. 17A, only the structure allocated to the lattice points 705 is extracted. The repetition controller 116 decouples the lattice points according to the inter-lattice-point distance (step S166: decoupling processing step). Specifically, the decoupling is performed in order from the longest inter-lattice-point distance (a state in which a relation between the lattice points is weak). Fig. 17B shows a state in which the lattice point 701 and the lattice point 706 are decoupled and the lattice point 701 and the lattice point 708 are decoupled from the state shown in Fig. 17A. Figs. 17A to 17C are conceptual diagrams showing a coupling relation between the lattice points and does not accurately show the inter-lattice-point distance. However, it is assumed that the inter-lattice-point distance is long for the sake of convenience in description.

In a case where the local stable structure is extracted based on the comparison result of the representative energies in the state shown in Fig. 17B (steps S162 and S164), the local stable structure is only the structure allocated to the lattice point 705 even in this state. In a case where the local stable structure is extracted based on the comparison result of the representative energies in the state shown in Fig. 17C by repeating such processing (steps S162 and S164), the (two) local stable structures allocated to the lattice points 701 and 705 are extracted in this state. The repetition controller 116 repeats these kinds of processing of steps S162 to S166 until the designated number of local stable structures are obtained (until YES in step S168). In a case where the designated number of local stable structures are obtained, the processing proceeds to step S170 in Fig. 4, and the energy distribution map (one aspect of the "information indicating the inter-lattice-point distance" in the present invention) is output. These kinds of processing of steps S162 to S168 can be performed as internal processing of the data processing device 10, and it is not necessary to create, as images, maps, distribution maps, and the like in order to extract the local stable structure. In a case where the images such as the maps and the distribution maps can be created and displayed as necessary (for example, in a case where there is an instruction of the user via the operation unit 400).

<Creation and display of energy distribution map>

The information output unit 118 creates the energy distribution map in which the lattice point space is projected in the two-dimensional space or the three-dimensional space according to the arrangement of the lattice points and the inter-lattice-point distance, and displays the energy distribution map on the monitor 310. The energy distribution map indicates the correspondence between the lattice point and the representative energy of the lattice point (step S170: information output step). The information output unit 118 can create and display the energy distribution map by using symbols having a size corresponding to the number of local stable structures allocated to the lattice points and a color corresponding to the representative energy of the lattice point. For example, the larger the number of local stable structures allocated to the lattice points, the larger the symbol indicating the lattice point. The lattice points having high representative energy can be displayed in red, and the lattice points having low representative energy can be displayed in blue. The distance between the lattice points on the energy distribution map may be the inter-lattice-point distance updated by the processing up to step S150, and the lattice points to be coupled may be coupled by a line. The arrangement of the lattice points can be determined by using, for example, the multidimensional scaling method as in the case of Example 1 described above.

<Example of energy distribution map>

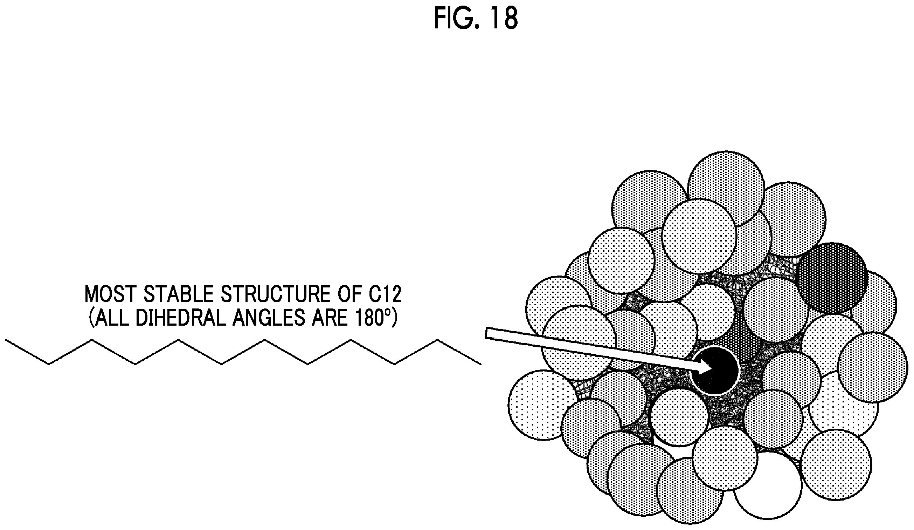

Fig. 18 shows an example of the energy distribution map (in a case where the lattice point space is projected in the two-dimensional space) created by classifying 1000 three-dimensional structures of $C_{12}$ (dodecane) by the SCTM method based on the dihedral angle. The most stable structure (all dihedral angles are 180 degrees) is arranged approximately in a center of the distribution map. The energy distribution map may be created by projecting the lattice point space in the three-dimensional space.

<Example of classification of molecular structure: about alanine dipeptide>

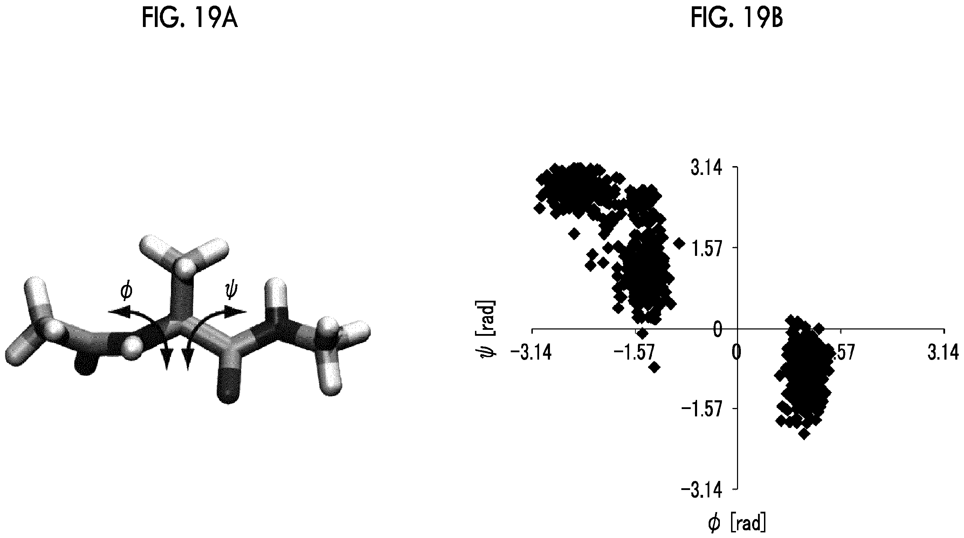

An example of the classification for alanine dipeptide (a peptide formed by coupling two alanines) will be described. Fig. 19A is a diagram showing a structure of the alanine dipeptide (the source is https://www.cp2k.org/exercises:2014_ethz_mmm:alanine_dipeptide). Fig. 19B is a distribution in which the three-dimensional structure obtained by molecular dynamics (MD) calculation is plotted by focusing on the dihedral angles $\varphi$ and $\psi$.

<Classification of three-dimensional structures by related art and method according to embodiment of present invention>

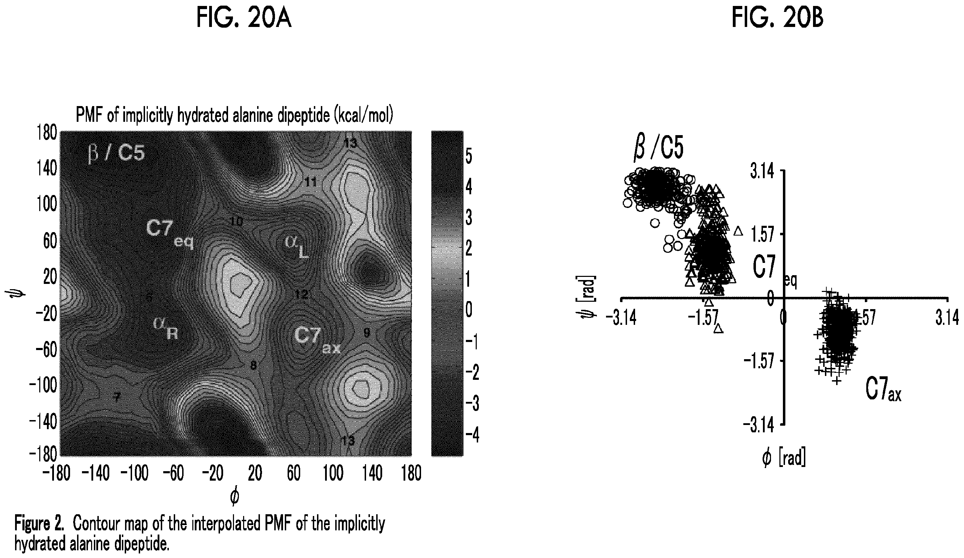

Fig. 20A is a known diagram showing a free energy curved surface of the alanine dipeptide (the source is J.Phys.ChemB 108, 19487 (2004)). The free energy curved surface of the alanine dipeptide has been widely studied, and it can be seen that the three-dimensional structures obtained by the molecular dynamics are the structures near three local stable points of $\beta$/C5, $C7_{eq}$, and $C7_{ax}$ in comparison with the distribution of the three-dimensional structure using the molecular dynamics described above (Fig. 19B) (see Fig. 20B). Hereinafter, the results obtained by confirming how the three-dimensional structures are classified by the related art (SOM) and the method according to the embodiment of the present invention (SCTM method) will be described.

<Classification result using SOM>

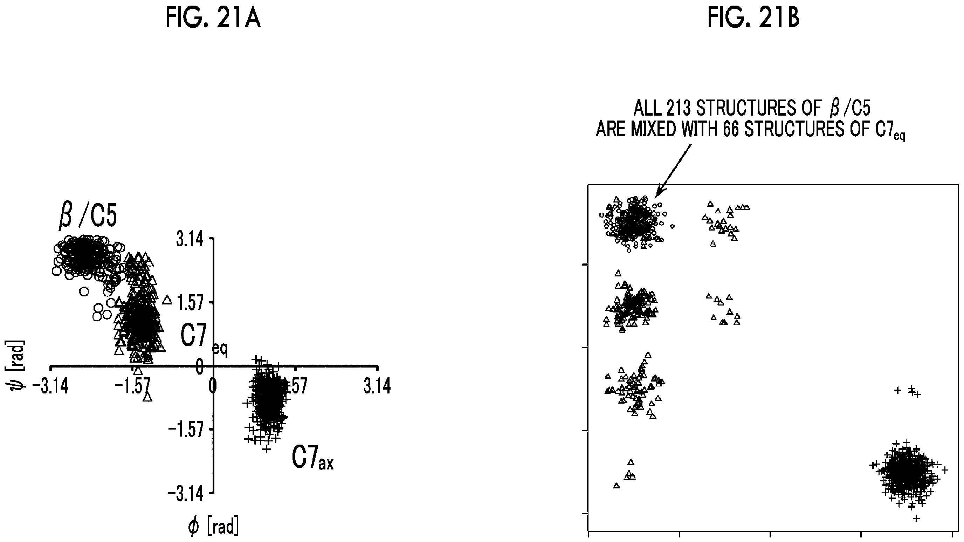

The result obtained by classifying the three-dimensional structures shown in Fig. 21A by the SOM is shown in Fig. 21B. The number of lattice points is 16 (= 4 × 4). In the SOM. the structure of $\beta$/C5 is mixed with the result of $C7_{eq}$, and three structure groups cannot be correctly classified.

<Classification result using SCTM method>

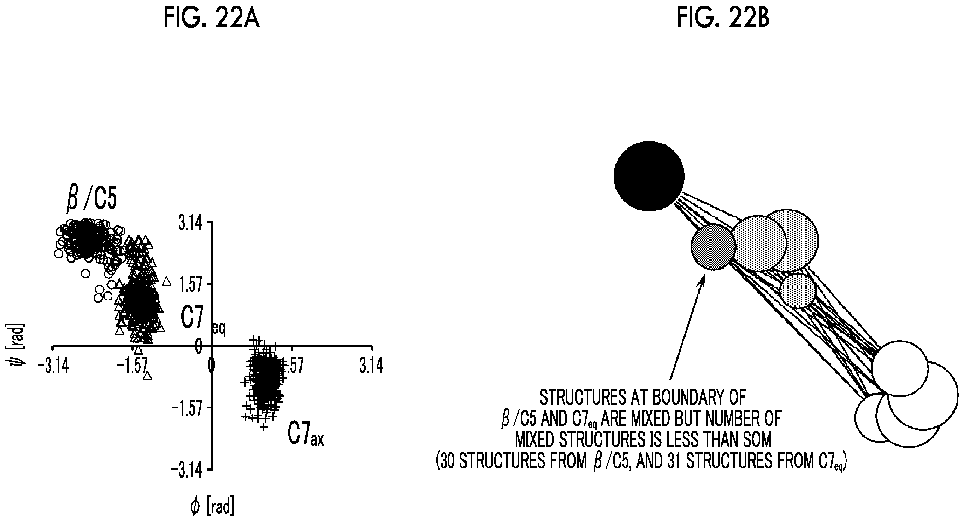

The result obtained by classifying the three-dimensional structures shown in Fig. 22A (are the same as the structures shown in Fig. 21A) by the SCTM method is shown in Fig. 22B. In the SCTM method, three structure groups (a plurality of pieces of high-dimensional data) can be correctly classified including a positional relation, and it can be seen that it is possible to more effectively classify the three-dimensional structures than the SOM (it is possible to appropriately classify the plurality of pieces of high-dimensional data).

<Search for local stable structure of compound>

<Search device of molecular stable structure>

In Example 2 described above, an aspect of a method of inputting a plurality of local stable structures (and energies thereof) of the compound but searching for the stable structures to be input will be described. Specifically, the stable structure includes, for example, a structural formula acquisition unit that acquires a structural formula of a compound, a three-dimensional structure generation unit that generates one or more three-dimensional structures, a local stable structure acquisition unit that changes internal coordinates of the three-dimensional structure, and obtains a local stable structure which is a structure having low energy, an energy acquisition unit that obtains internal coordinates of the local stable structure and an energy of the local stable structure at the internal coordinates, an energy distribution function calculation unit that calculates an energy distribution function calculated for each internal coordinate of each atom constituting the compound, the energy distribution function indicating a distribution of the energy of the local stable structure for the internal coordinates of the local stable structure, a probability distribution function calculation unit that calculates a probability distribution function for increasing a probability of the low-energy internal coordinates from the energy distribution function, and an output unit that outputs the local stable structure. The three-dimensional structure generation unit can search for a search device of a molecular stable structure that generates a three-dimensional structure based on the acquired structural formula of the compound or the probability distribution function.

<Configuration of search device>

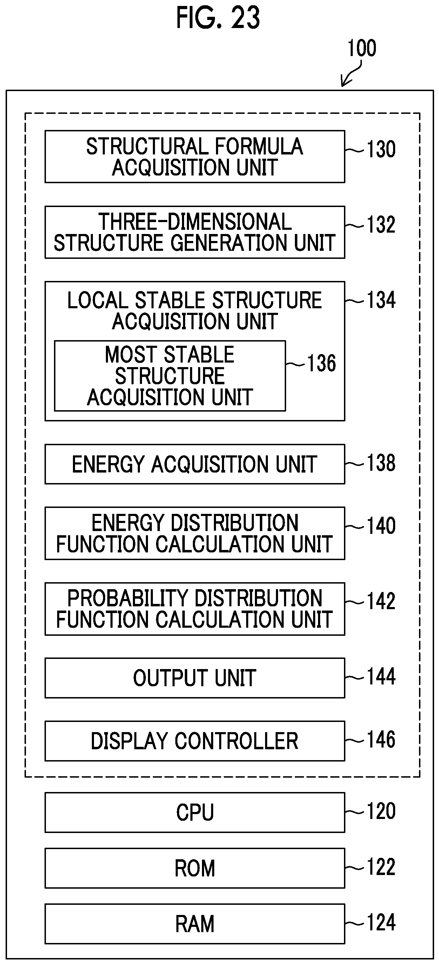

The search device of the molecular stable structure described above can be realized by the same configuration as that of the data processing device 10 shown in Fig. 1. However, in the search device, the processing unit 100 includes a configuration of a portion surrounded by a dotted line of Fig. 23 (from a structural formula acquisition unit 130 to a display controller 146) instead of or in addition to a configuration of a part of the data processing device 10 (a portion surrounded by a dotted line in Fig. 2; from the data input unit 102 to the information output unit 118). The structural formula acquisition unit 130 acquires information such as the structural formula of the compound via a DVD drive (not shown), a recording medium interface such as a semiconductor memory terminal, and/or a network. The three-dimensional structure generation unit 132 randomly sets the internal coordinates of the structural formula from the structural formula of the compound acquired by the structural formula acquisition unit 130, and generates one or more three-dimensional structures. The internal coordinates are determined based on a probability distribution function to be described later, and one or more three-dimensional structures are generated. The local stable structure acquisition unit 134 changes the internal coordinates of the three-dimensional structure generated by the three-dimensional structure generation unit 132, and acquires the local stable structure which is the structure having low energy locally by performing local structural deformation on this structure. Specifically, the local stable structure is a structure in which the structure is deformed such that the energy becomes low and the energy does not become low even though the structure is deformed. The local stable structure acquisition unit 134 includes a most stable structure acquisition unit 136, and acquires the most stable structure having the lowest energy from the obtained local stable structures. In the search device and search method of the molecular stable structure, the "energy" is energy derived from the three-dimensional structure, and does not indicate energy caused by changing one of internal coordinates to be described later.

The energy acquisition unit 138 acquires the energy of the local stable structure acquired by the local stable structure acquisition unit 134. The energy distribution function calculation unit 140 calculates the energy distribution function indicating the distribution of the energy of the local stable structure (structural energy) for each of the internal coordinates of the local stable structure. The energy distribution function is calculated for each internal coordinate constituting the compound. The probability distribution function calculation unit 142 calculates the probability distribution function for increasing the probability of the internal coordinates having low energy from the energy distribution function.

The output unit 144 outputs the local stable structure acquired by the local stable structure acquisition unit 134. The most stable structure acquisition unit 136 outputs the most stable structure. The display controller 146 controls the display of the acquired information and the processing result on the monitor 310. The details of the processing of the search method of the molecular stable structure using these functions of the processing unit 100 will be described later. The functions of the units of the processing unit 100 related to the search for the molecular stable structure can be realized by using various processors similar to the flowchart described above with reference to Fig. 2. These kinds of processing performed by these functions are performed under the control of the CPU 120.

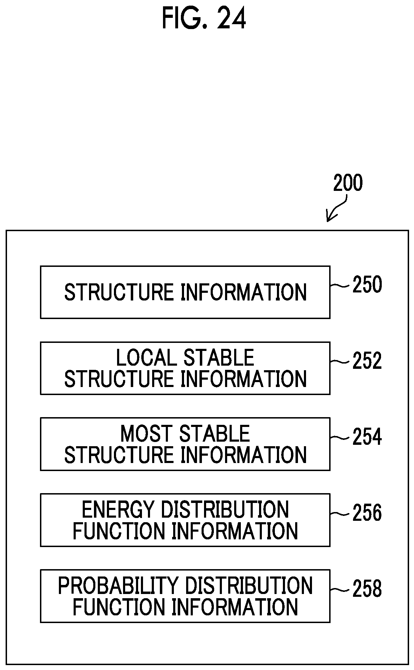

The storage unit 200 stores the information shown in Fig. 24 instead of or in addition to the information shown in Fig. 3. Structure information 250 includes the structural formula of the compound. Local stable structure information 252 includes the three-dimensional structure information (internal coordinate information) of the local stable structure obtained by changing the internal coordinates of the three-dimensional structure generated from the structure information 250 and information on an energy value thereof. The local stable structure information includes the three-dimensional structure information (internal coordinate information) of the local stable structure obtained by changing the internal coordinates of the three-dimensional structure generated from the probability distribution function and the information on the energy value thereof. Most stable structure information 254 includes the three-dimensional structure information (internal coordinate information) of the most stable structure which is the structure having the lowest energy among the local stable structures, and information on the energy value thereof. Energy distribution function information 256 includes the energy distribution function indicating the distribution of the energy of the local stable structure (structural energy) for the internal coordinates with respect to one internal coordinate of the local stable structure. Probability distribution function information 258 includes the probability distribution function for increasing the probability of the low-energy internal coordinates with respect to one internal coordinate. The energy distribution function information 256 and the probability distribution function information 258 include the calculated energy distribution function and probability distribution function for each of the internal coordinates of the atoms constituting the compound. The energy distribution function and the probability distribution function with high accuracy are obtained by acquiring the local stable structure from the three-dimensional structure generated by the probability distribution function and reflecting the internal coordinates and the energy of the local stable structure to be obtained on the energy distribution function and the probability distribution function. The energy distribution function information 256 and the probability distribution function information 258 also include the energy distribution function and the probability distribution function on which the internal coordinates and the energy of these local stable structures are reflected.

<Configuration of display unit and operation unit>

The user can perform the operations necessary for executing the search method of the molecular stable structure via the screens of the monitor 310 by using the keyboard 410 and the mouse 420 shown in Fig. 1. The operations capable of being executed by the user include, for example, an input of the structural formula of the compound, a designation of a threshold value in the case of calculating the probability distribution function, and a designation of a threshold value in the case of generating the three-dimensional structure by using the probability distribution function.

<Search method of molecular stable structure>

In the device having the configuration described above, searching of a molecular stable structure can be performed by a search method of a molecular stable structure including a structural formula acquisition step of acquiring a structural formula of a compound, a first three-dimensional structure generation step of generating one or more three-dimensional structures in which internal coordinates of the structural formula are randomly set, a local stable structure acquisition step of changing the internal coordinates of the three-dimensional structure and obtaining the local stable structure which is the structure having low energy, an energy acquisition step of obtaining the internal coordinates of the local stable structure and the energy of the local stable structure in the internal coordinates, an energy distribution function calculation step of calculating a one-dimensional or a multidimensional energy distribution function calculated for one or each of a plurality of internal coordinates constituting the compound, the energy distribution function indicating a distribution of the energy of the local stable structure for the internal coordinates of the local stable structure, a probability distribution function calculation step of calculating a probability distribution function for increasing a probability of the low-energy internal coordinates from the energy distribution function, a second three-dimensional structure generation step of simultaneously changing one or more internal coordinates based on the probability distribution function and generating one or more three-dimensional structures by using the determined internal coordinates, a repetition step of repeating the local stable structure acquisition step, the energy acquisition step, the energy distribution function calculation step, the probability distribution function calculation step, and the second three-dimensional structure generation step by using the three-dimensional structure generated in the second three-dimensional structure generation step, and an output step of outputting at least any one of a plurality of local stable structures obtained in the local stable structure acquisition step or the structure having the lowest energy from the plurality of local stable structures.

In the search method described above, first, the three-dimensional structure is generated from the structural formula, the local stable structure is acquired by changing the internal coordinates, and the energy distribution function and the probability distribution function for increasing the probability of the low-energy internal coordinates are calculated from the obtained local stable structure. The probability of the internal coordinates with which the structure having low energy is obtained can be increased by generating the three-dimensional structure based on this probability distribution function, acquiring the local stable structure, and reflecting the internal coordinates of this local stable structure and the value of the energy on the probability distribution function. Accordingly, the local stable structure having low energy can be easily acquired. The local stable structure having lower energy can be obtained by increasing the number of times of the repetition step. Accordingly, the structure having the lowest energy (the most stable structure) can be acquired in a short time from the plurality of obtained local stable structures. The search method described above is not a conformational search based on local structural deformation. However, since the structure is searched for while simultaneously changing one or more internal coordinates based on the probability distribution function, various local stable structures can be obtained in a short time.

<Procedure of search method>

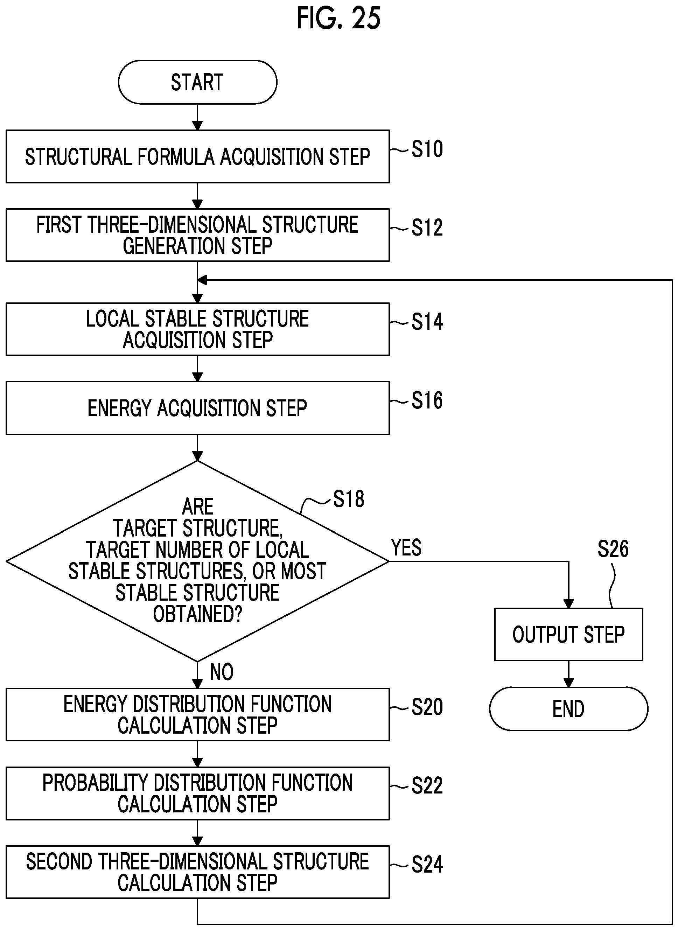

Fig. 25 is a flowchart showing a method for searching a molecular stable structure of a compound. First, a search method of a molecular stable structure includes a structural formula acquisition step of acquiring a structural formula of a compound (step S10), a first three-dimensional structure generation step of generating one or more three-dimensional structures in which internal coordinates of the structural formula are randomly set (step S12), a local stable structure acquisition step of obtaining a local stable structure from the generated three-dimensional structure (step S14), an energy acquisition step of obtaining a value of energy of the local stable structure (structural energy) and internal coordinates of each atom of the local stable structure (step S16), and a step of determining whether or not a desired structure, a desired number of local stable structures, or a most stable structure are obtained (step S18).

The search method further includes an energy distribution function calculation step of calculating an energy distribution function indicating a distribution of energy of the local stable structure for the internal coordinates of the local stable structure in each internal coordinate in a case where it is determined in step S18 that the desired structure, the desired number of local stable structures, or the most stable structure are not obtained (step S20), a probability distribution function calculation step of calculating a probability distribution function for increasing a probability of the low-energy internal coordinates from the energy distribution function (step S22), and a second three-dimensional structure generation step of generating one or more three-dimensional structures based on the probability distribution function (step S24). As the energy distribution function, a one-dimensional energy distribution function may be calculated for each one internal coordinate constituting the compound. A two-dimensional energy distribution function may be calculated by using two internal coordinates, or a multidimensional energy distribution function may be calculated by using a plurality of internal coordinates. In the probability distribution function calculation step, it is preferable that a function for accelerating the calculation is added. The function for accelerating the calculation can include a white noise, but is not limited thereto.

After the three-dimensional structure is generated in step S24, the processing returns to step S14. The local stable structure is acquired from this three-dimensional structure, and the internal coordinates and the value of the energy of the local stable structure are acquired. The internal coordinates and the value of the energy of this local stable structure are reflected on the energy distribution function and the probability distribution function up to now. The probability distribution function obtained in step S22 can be the probability distribution function having a high probability of the internal coordinates at which the low energy is obtained by repeating steps S14 to S24. The probability with which the local stable structure having lower energy is obtained can be increased by using this probability distribution function.

The search method further includes an output step of outputting one most stable structure having the lowest energy from the plurality of obtained local stable structures and the local stable structures in a case where it is determined in step S18 that a target structure, a target number of local stable structures, or the most stable structure are obtained (step S26). The plurality of local stable structures can be obtained by repeating the steps of steps S14 to S24. The most stable structure among the obtained structures can be obtained by selecting the structure having the lowest energy from the local stable structures. Except for a specific compound, it is not possible to objectively determine whether or not the obtained most stable structure is truly the most stable. However, the larger the number of times steps S14 to S24 are repeated, the higher the probability with which the obtained most stable structure is truly the most stable. It is possible to estimate whether the obtained most stable structure is truly the most stable from a state of convergence of the probability distribution function to some extent. The molecular stable structure can be determined by obtaining the most stable structure among the obtained structures. In a case where the most stable structure is not adopted as the actual three-dimensional structure of the compound, a candidate for the next three-dimensional structure can be selected from the local stable structures by outputting the plurality of local stable structures. The plurality of local stable structures can be output.

Although the embodiments of the present invention have been described above, the present invention is not limited to the above-described aspects, and various modifications can be made without departing from the spirit of the present invention. For example, the iris data described in Examples 1 and 2 and general data other than the three-dimensional structure of the compound can be classified.

Explanation of References

1: lattice point
2: lattice point
3: lattice point
4: lattice point
10: data processing device
100: processing unit
102: data input unit
104: initial value setting unit
106: distance calculation unit
108: search unit
110: data allocation unit
112: correction vector calculation unit
114: distance update unit
116: repetition controller
118: information output unit
120: CPU
122: ROM
124: RAM
130: structural formula acquisition unit
132: three-dimensional structure generation unit
134: local stable structure acquisition unit
136: most stable structure acquisition unit
138: energy acquisition unit
140: energy distribution function calculation unit
142: probability distribution function calculation unit
144: output unit
146: display controller
200: storage unit
202: input data

204: reference vector information
206: distance function information
208: reflection function information
210: inter-lattice-point distance information
212: lattice point distribution map
214: energy distribution map
250: structure information
252: local stable structure information
254: most stable structure information
256: energy distribution function information
258: probability distribution function information
300: display unit
310: monitor
400: operation unit
410: keyboard
420: mouse
500: external server
510: external database
701: lattice point
705: lattice point
706: lattice point
708: lattice point
801: lattice point
802: lattice point
803: lattice point
804: lattice point
1000: network
A1: lattice point
A2: lattice point
A3: lattice point
A4: lattice point
D: distance function
S10 to S26: steps of search method of molecular stable structure
S100 to S178: steps of data processing method
$\varphi$: dihedral angle
$\psi$: dihedral angle

**Claims**

1. A data processing device comprising:

   a data input unit that inputs a plurality of pieces of data;
   an initial value setting unit that sets initial values of reference vectors to all lattice points of a lattice point space including a plurality of lattice points based on the plurality of pieces of data, one lattice point being coupled to all other lattice points in the lattice point space;
   a distance calculation unit that calculates inter-lattice-point distances between one lattice point and the other lattice points by using a designated distance function based on the initial values of the reference vectors;
   a search unit that calculates distances between an input vector constituted by components of the plurality of pieces of data and the reference vectors for the lattice points based on the distance function, and searches for a nearest lattice point which is the lattice point of which the distance from the input vector is the shortest based on a result of the calculation;
   a data allocation unit that allocates, as data for the nearest lattice point, each of the plurality of pieces of data based on a result of the search;
   a correction vector calculation unit that calculates correction vectors for the reference vectors by using a reflection function for reflecting information on the plurality of pieces of data on the nearest lattice point and the lattice points near the nearest lattice point;
   a distance update unit that corrects the reference vectors by adding the correction vectors to the reference vectors of the lattice points, and updates the inter-lattice-point distances by using the plurality of pieces of data allocated to the lattice points and the reference vectors;

a repetition controller that repeats processing in the search unit, the data allocation unit, the correction vector calculation unit, and the distance update unit for all the plurality of pieces of data and all the plurality of lattice points until a designated end condition is satisfied; and

an information output unit that outputs information indicating the inter-lattice-point distances updated by the repetition.

2. The data processing device according to claim 1,
   wherein the distance calculation unit calculates the inter-lattice-point distances by using the reference vector of the one lattice point and the reference vectors of the other lattice points, and
   the search unit calculates the distances by using the input vector and the reference vectors.

3. The data processing device according to claim 1 or 2,
   wherein the initial value setting unit sets the initial values of the reference vectors based on statistical features of the data.

4. The data processing device according to any one of claims 1 to 3,
   wherein the distance function is a function for obtaining a distance between the pieces of data.

5. The data processing device according to any one of claims 1 to 4,
   wherein the correction vector calculation unit calculates the correction vector by using, as the reflection function, a function of which a value decreases as the inter-lattice-point distance increases.

6. The data processing device according to any one of claims 1 to 5,
   wherein the initial value setting unit sets the initial values of the reference vectors to the lattice points of the lattice point space in which the number of lattice points is less than the number of the plurality of pieces of data.

7. The data processing device according to any one of claims 1 to 6,
   wherein the information output unit creates and outputs a lattice point distribution map on which a distribution of the lattice points and the plurality of pieces of data allocated to the lattice points are represented in a two-dimensional space or a three-dimensional space based on the information indicating the inter-lattice-point distances.

8. The data processing device according to claim 7,
   wherein the information output unit sets an initial arrangement of the lattice points in the two-dimensional space or the three-dimensional space, minimizes a designated evaluation function by adjusting the arrangement of the lattice points, and creates and outputs the lattice point distribution map based on the adjusted arrangement.

9. The data processing device according to any one of claims 1 to 6,
   wherein the data input unit inputs local stable structures of a compound and energies of the local stable structures in association with each other, and
   the repetition controller repeats extraction processing of extracting the local stable structures of the compound based on the updated inter-lattice-point distances and decoupling processing of decoupling the lattice points according to the inter-lattice-point distances until a designated number of local stable structures are extracted.

10. The data processing device according to claim 9,
    wherein the repetition controller performs, as the extraction processing, processing of setting, as a representative energy of one lattice point, a minimum energy among the energies of the local stable structures allocated to the one lattice point for the one lattice point, comparing the representative energies between the one lattice point and all other lattice points coupled to the one lattice point, and extracting the local stable structure corresponding to the minimum representative energy based on a result of the comparison.

11. The data processing device according to claim 10,
    wherein the information output unit displays an energy distribution map indicating a correspondence between the lattice points and the representative energies of the lattice points on a display device, the lattice point space being projected in the two-dimensional space or the three-dimensional space according to an arrangement of the lattice points and the inter-lattice-point distances on the energy distribution map.

**12.** The data processing device according to claim 11,
wherein the information output unit displays the energy distribution map by using a symbol having a size corresponding to the number of local stable structures allocated to the lattice point and a color corresponding to the representative energy of the lattice point.

**13.** A data processing method of a data processing device that includes a data input unit which inputs data, a data processing unit that processes the input data, and an information output unit that outputs information regarding the processed data, the method comprising:

a data input step of inputting, by the data input unit, a plurality of pieces of data;
an initial value setting step of setting, by the data processing unit, initial values of reference vectors to all lattice points in a lattice point space including a plurality of lattice points based on the plurality of pieces of data, one lattice point being coupled to all other lattice points in the lattice point space;
a distance calculation step of calculating, by the data processing unit, inter-lattice-point distances between one lattice point and other lattice points by using a designated distance function based on the initial values of the reference vectors;
a search step of calculating, by the data processing unit, distances between an input vector constituted by components of the plurality of pieces of data and the reference vectors for the lattice points based on the distance function, and searching for a nearest lattice point which is the lattice point of which the distance from the input vector is the shortest based on a result of the calculation;
a data allocation step of allocating, by the data processing unit, as data for the nearest lattice point, the plurality of pieces of data based on a result of the search;
a correction vector calculation step of calculating, by the data processing unit, correction vectors for the reference vectors by using a reflection function for reflecting information on the plurality of pieces of data on the nearest lattice point and the lattice points near the nearest lattice point;
a distance update step of correcting, by the data processing unit, the reference vectors by adding the correction vectors to the reference vectors of the lattice points, and updating the inter-lattice-point distances by using the data allocated to the lattice points and the reference vectors;
a repetition control step of repeating, by the data processing unit, processing in the search step, the data allocation step, the correction vector calculation step, and the distance update step for all the plurality of pieces of data and for all the plurality of lattice points until a designated end condition is satisfied, and
an information output step of outputting, by the information output unit, information indicating the inter-lattice-point distances updated by the repetition.

**14.** A data processing program causing a computer to execute:

a data input step of inputting a plurality of pieces of data;
an initial value setting step of setting initial values of reference vectors to all lattice points of a lattice point space including a plurality of lattice points based on the data, one lattice point being coupled to all other lattice points in the lattice point space;
a distance calculation step of calculating inter-lattice-point distances between one lattice point and other lattice points by using a designated distance function based on the initial values of the reference vectors;
a search step of calculating distances between an input vector constituted by a plurality of components of the data and the reference vectors for the lattice points based on the distance function, and searching for a nearest lattice point which is the lattice point of which the distance from the input vector is the shortest based on a result of the calculation;
a data allocation step of allocating, as data for the nearest lattice point, the data based on a result of the search;
a correction vector calculation step of calculating correction vectors for the reference vectors by using a reflection function for reflecting information on the data on the nearest lattice point and the lattice points near the nearest lattice point;
a distance update step of correcting the reference vectors by adding the correction vectors to the reference vectors of the lattice points and updating the inter-lattice-point distances by using the data allocated to the lattice points and the reference vectors;
a repetition control step of repeating processing in the search step, the data allocation step, the correction vector calculation step, and the distance update step for all the plurality of pieces of data and all the plurality of lattice points until a designated end condition is satisfied; and
an information output step of outputting information indicating the inter-lattice-point distances updated by the repetition.

15. A non-transitory recording medium having a computer-readable code of the data processing program according to claim 14 recorded thereon.

# FIG. 1

# FIG. 2

100

| DATA INPUT UNIT | ~102 |

| INITIAL VALUE SETTING UNIT | ~104 |

| DISTANCE CALCULATION UNIT | ~106 |

| SEARCH UNIT | ~108 |

| DATA ALLOCATION UNIT | ~110 |

| CORRECTION VECTOR CALCULATION UNIT | ~112 |

| DISTANCE UPDATE UNIT | ~114 |

| REPETITION CONTROLLER | ~116 |

| INFORMATION OUTPUT UNIT | ~118 |

| CPU | ~120 |

| ROM | ~122 |

| RAM | ~124 |

# FIG. 3

200

| INPUT DATA | ~202 |
|---|---|

| REFERENCE VECTOR INFORMATION | ~204 |
|---|---|

| DISTANCE FUNCTION INFORMATION | ~206 |
|---|---|

| REFLECTION FUNCTION INFORMATION | ~208 |
|---|---|

| INTER-LATTICE-POINT DISTANCE INFORMATION | ~210 |
|---|---|

| LATTICE POINT DISTRIBUTION MAP | ~212 |
|---|---|

| ENERGY DISTRIBUTION MAP | ~214 |
|---|---|

## FIG. 4

```
        ┌─────────────┐
        │    START    │
        └─────────────┘
               │
               ▼
   ┌───────────────────────┐
   │    DATA INPUT STEP     │──── S100
   └───────────────────────┘
               │
               ▼
   ┌───────────────────────┐
   │ INITIAL VALUE SETTING  │──── S110
   │         STEP           │
   └───────────────────────┘
               │
               ▼
   ┌───────────────────────┐
   │ DISTANCE CALCULATION   │──── S120
   │         STEP           │
   └───────────────────────┘
               │
               ▼ ◄──────────────────────┐
   ┌───────────────────────┐            │
   │      SEARCH STEP       │──── S130   │
   └───────────────────────┘            │
               │                        │
               ▼                        │
   ┌───────────────────────┐            │
   │  DATA ALLOCATION STEP  │──── S140   │
   └───────────────────────┘            │
               │                        │
               ▼                        │
   ┌───────────────────────┐            │
   │  DISTANCE UPDATE STEP  │──── S150   │
   └───────────────────────┘            │
               │                        │
               ▼          S160          │
          ╱─────────────╲    NO         │
         ╱  IS END       ╲──────────────┘
         ╲  CONDITION     ╱
          ╲ SATISFIED?   ╱
           ╲─────────────╱
               │ YES
               ▼
   ┌───────────────────────┐
   │ INFORMATION OUTPUT     │──── S170
   │         STEP           │
   └───────────────────────┘
               │
               ▼
        ┌─────────────┐
        │     END     │
        └─────────────┘
```

FIG. 5

| Index | Sepal length | Sepal width | Petal length | Petal width | Species |
|-------|-------------|-------------|--------------|-------------|-----------|
| 1 | 5.1 | 3.5 | 1.4 | 0.2 | Setosa |
| 2 | 4.9 | 3.0 | 1.4 | 0.2 | Setosa |
| ⋮ | ⋮ | ⋮ | ⋮ | ⋮ | ⋮ |
| 51 | 7.0 | 3.2 | 4.7 | 1.4 | Versicolor |
| 52 | 6.4 | 3.2 | 4.5 | 1.5 | Versicolor |
| ⋮ | ⋮ | ⋮ | ⋮ | ⋮ | ⋮ |
| 101 | 6.3 | 3.3 | 6.0 | 2.5 | Virginica |
| 102 | 5.8 | 2.7 | 5.1 | 1.9 | Virginica |
| ⋮ | ⋮ | ⋮ | ⋮ | ⋮ | ⋮ |
| 150 | 5.9 | 3.0 | 5.1 | 1.8 | Virginica |

EP 3 812 973 A1

# FIG. 6

● : Setosa　　　◉ : Versicolor　　　○ : Virginica

## FIG. 7

| LATTICE POINT | INPUT DATA |
|---|---|
| 1 | 53 78 84 101 102 103 104 105 106 108 109 110 111 112 113 115 116 117 118 119 121 123 124 125 126 129 130 131 132 133 134 135 136 137 138 140 141 142 143 144 145 146 147 148 149 150 |
| 2 | 51 52 54 55 56 57 59 62 63 64 66 67 68 69 70 71 72 73 74 75 76 77 79 83 85 86 87 88 89 90 91 92 93 95 96 97 98 100 107 114 120 122 127 128 139 |
| 3 | 58 60 61 65 80 81 82 94 99 |
| 4 | 1 2 3 4 5 6 7 8 9 10 11 12 13 14 15 16 17 18 19 20 21 22 23 24 25 26 27 28 29 30 31 32 33 34 35 36 37 38 39 40 41 42 43 44 45 46 47 48 49 50 |

# FIG. 8

START

SET INITIAL ARRANGEMENT OF LATTICE POINTS — S172

ADJUST ARRANGEMENT OF LATTICE POINTS, AND MINIMIZE DESIGNATED EVALUATION FUNCTION — S174

CREATE LATTICE POINT DISTRIBUTION MAP BASED ON ADJUSTED ARRANGEMENT OF LATTICE POINTS — S176

OUTPUT CREATED LATTICE POINT DISTRIBUTION MAP — S178

END

## FIG. 9

$$\langle D \rangle = \frac{2}{N(N-1)} \sum_{i<j}^{N} D(i,j)$$

## FIG. 10

4 (50:0:0)

2 (0:24:17)

3 (0:26:1)

1 (0:0:32)

FIG. 11A

FIG. 11B

◆ : Setosa    ▦ : Versicolor    △ : Virginica

EP 3 812 973 A1

EP 3 812 973 A1

FIG. 12A

FIG. 12B

FIG. 13

FIG. 14

ENERGY CURVED SURFACE

ENVELOPE CURVE

ENERGY

THREE-DIMENSIONAL STRUCTURE

EP 3 812 973 A1

# FIG. 15

FROM STEP S160

COMPARE REPRESENTATIVE ENERGIES BETWEEN LATTICE POINTS — S162

EXTRACT LOCAL STABLE STRUCTURES CORRESPONDING MINIMUM REPRESENTATIVE ENERGY — S164

DECOUPLE LATTICE POINTS ACCORDING TO INTER-LATTICE-POINT DISTANCES — S166

S168
ARE DESIGNATED NUMBER OF LOCAL STABLE STRUCTURES EXTRACTED?

NO

YES

TO STEP S170

# FIG. 16

701

3 — 7 — 5

6 — 2 — 4 — 706

5 — 3 — 7

705

708

FIG. 17A

FIG. 17B

FIG. 17C

EP 3 812 973 A1

FIG. 18

MOST STABLE STRUCTURE OF C12
(ALL DIHEDRAL ANGLES ARE 180º)

EP 3 812 973 A1

FIG. 19A

FIG. 19B

EP 3 812 973 A1

FIG. 20B

FIG. 20A

Figure 2. Contour map of the interpolated PMF of the implicitly hydrated alanine dipeptide.

FIG. 21A

FIG. 21B

β /C5

$\psi$ [rad]

3.14

1.57

C7$_{eq}$

0

-3.14   -1.57   0   1.57   3.14

-1.57

C7$_{ax}$

-3.14

$\phi$ [rad]

ALL 213 STRUCTURES OF β /C5
ARE MIXED WITH 66 STRUCTURES OF C7$_{eq}$

EP 3 812 973 A1

# FIG. 22A

# FIG. 22B

STRUCTURES AT BOUNDARY OF
$\beta$ /C5 AND $C7_{eq}$ ARE MIXED BUT NUMBER OF
MIXED STRUCTURES IS LESS THAN SOM
(30 STRUCTURES FROM $\beta$ /C5, AND 31 STRUCTURES FROM $C7_{eq}$)

## FIG. 23

100

STRUCTURAL FORMULA ACQUISITION UNIT ～130

THREE-DIMENSIONAL STRUCTURE GENERATION UNIT ～132

LOCAL STABLE STRUCTURE ACQUISITION UNIT ～134

MOST STABLE STRUCTURE ACQUISITION UNIT ～136

ENERGY ACQUISITION UNIT ～138

ENERGY DISTRIBUTION FUNCTION CALCULATION UNIT ～140

PROBABILITY DISTRIBUTION FUNCTION CALCULATION UNIT ～142

OUTPUT UNIT ～144

DISPLAY CONTROLLER ～146

CPU ～120

ROM ～122

RAM ～124

# FIG. 24

200

| STRUCTURE INFORMATION | ～250 |
| LOCAL STABLE STRUCTURE INFORMATION | ～252 |
| MOST STABLE STRUCTURE INFORMATION | ～254 |
| ENERGY DISTRIBUTION FUNCTION INFORMATION | ～256 |
| PROBABILITY DISTRIBUTION FUNCTION INFORMATION | ～258 |

# FIG. 25

START

STRUCTURAL FORMULA ACQUISITION STEP — S10

FIRST THREE-DIMENSIONAL STRUCTURE GENERATION STEP — S12

LOCAL STABLE STRUCTURE ACQUISITION STEP — S14

ENERGY ACQUISITION STEP — S16

ARE TARGET STRUCTURE, TARGET NUMBER OF LOCAL STABLE STRUCTURES, OR MOST STABLE STRUCTURE OBTAINED? — S18

YES

NO

S26

OUTPUT STEP

END

ENERGY DISTRIBUTION FUNCTION CALCULATION STEP — S20

PROBABILITY DISTRIBUTION FUNCTION CALCULATION STEP — S22

SECOND THREE-DIMENSIONAL STRUCTURE CALCULATION STEP — S24

**EP 3 812 973 A1**

## INTERNATIONAL SEARCH REPORT

| International application No. |
| --- |
| PCT/JP2019/021542 |

A. CLASSIFICATION OF SUBJECT MATTER
Int.Cl. G06N20/00(2019.01)i, G06F16/906(2019.01)i

According to International Patent Classification (IPC) or to both national classification and IPC

B. FIELDS SEARCHED

Minimum documentation searched (classification system followed by classification symbols)
Int.Cl. G06N20/00, G06F16/906

Documentation searched other than minimum documentation to the extent that such documents are included in the fields searched

| | |
| --- | --- |
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | JP 2006-504159 A (3-DIMENSIONAL PHARMACEUTICALS, INC.) 02 February 2006, entire text, all drawings & US 2006/0178831 A1 & WO 2003/107120 A2 | 1-15 |
| A | 大藪又茂，徳高平蔵，大北正昭，松田充夫，球面 SOM の理論とクラスタ分析への応用，知能と情報，15 December 2007, vol. 19, no. 6 (通巻 105 号), pp. 4-12, ISSN 1347-7986, (OYABU, Matashige, TOKUTAKA, Heizo, OHKITA, Masaaki, MATSUDA, Mitsuo, Theory of spherical SOM and its application to clustering, Journal of Japan Society for Fuzzy Theory and Intelligent Informatics), non-official translation (105th issue) | 1-15 |

☐ Further documents are listed in the continuation of Box C.  ☐ See patent family annex.

| | |
| --- | --- |
| *  Special categories of cited documents: | "T"  later document published after the international filing date or priority date and not in conflict with the application but cited to understand the principle or theory underlying the invention |
| "A"  document defining the general state of the art which is not considered to be of particular relevance | |
| "E"  earlier application or patent but published on or after the international filing date | "X"  document of particular relevance; the claimed invention cannot be considered novel or cannot be considered to involve an inventive step when the document is taken alone |
| "L"  document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O"  document referring to an oral disclosure, use, exhibition or other means | |
| "P"  document published prior to the international filing date but later than the priority date claimed | "&"  document member of the same patent family |

| Date of the actual completion of the international search | Date of mailing of the international search report |
| --- | --- |
| 29.07.2019 | 13.08.2019 |

| Name and mailing address of the ISA/ | Authorized officer |
| --- | --- |
| Japan Patent Office 3-4-3, Kasumigaseki, Chiyoda-ku, Tokyo 100-8915, Japan | Telephone No. |

Form PCT/ISA/210 (second sheet) (January 2015)

47

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007277234 A

**Non-patent literature cited in the description**

- **YUJI IKEGAYA.** *self-organizing - automatic classification algorithm,* 07 May 2018, http://gaya.jp/spiking_neuron/som.htm

- *J.Phys.ChemB,* 2004, vol. 108, 19487